# EUROPÄISCHE PATENTSCHRIFT

(11) **EP 2 608 355 B1**
(45) Veröffentlichungstag und Bekanntmachung des Hinweises auf die Patenterteilung: **06.04.2016**
(21) Anmeldenummer: 12198929.7
(22) Anmeldetag: 21.12.2012
(51) Int. Cl.: H02J 9/06

(54) **Vorrichtung zur unterbrechungsfreien Stromversorgung von elektrischen Verbrauchern und Verfahren zum Betrieb der Vorrichtung**
Device for the continuous power supply of electrical consumers and method for operating the device
Dispositif d'alimentation en courant sans interruption de consommateurs électriques et procédé de fonctionnement du dispositif

(30) Priorität: 23.12.2011 DE 102011089851
(43) Veröffentlichungstag der Anmeldung: 26.06.2013
(73) Patentinhaber: TelecityGroup Germany GmbH, 60327 Frankfurt am Main (DE)
(72) Erfinder: Voß, Ralph, 99880 Laucha (DE); McCarthy, Chad, 60486 Frankfurt am Main (DE)
(74) Vertreter: Liedtke, Markus

(56) Entgegenhaltungen:
- US-A1- 2008 034 256

## Beschreibung

Die Erfindung betrifft eine Vorrichtung zur unterbrechungsfreien Stromversorgung von elektrischen Verbrauchern, wobei zumindest zwei voneinander unabhängige elektrische Eigenerzeugeranlagen elektrisch parallel verschaltet sind, wobei jede Eigenerzeugeranlage mit zumindest einer elektrischen Verbraucherschiene, umfassend zumindest einen elektrischen Verbraucheranschluss, gekoppelt ist.

Die Erfindung betrifft weiterhin ein Verfahren zum Betrieb der Vorrichtung.

Aus dem Stand der Technik ist es allgemein bekannt, dass bei Störungen im Stromnetz eine elektrische Versorgung von hochverfügbaren elektrischen Verbrauchern mittels einer so genannten unterbrechungsfreien Stromversorgung, kurz USV, sichergestellt wird. Die unterbrechungsfreie Stromversorgung wird dadurch realisiert, dass die elektrischen Verbraucher mittels Vorrichtungen zur unterbrechungsfreien Stromversorgung ohne Unterbrechung bei einem Ausfall des Stromnetzes bzw. einer Netzeinspeisung weiterversorgt werden.

Nach dem Stand der Technik wird die unterbrechungsfreie Energieversorgung von hoch verfügbaren Verbrauchern mit Vorrichtungen zur unterbrechungsfreien Stromversorgung sichergestellt, welche sich durch unterschiedliche Redundanzen auszeichnen.

Für die Vorrichtungen zur unterbrechungsfreien Stromversorgung erfolgt die Ersatznetzversorgung dabei mittels so genannter elektrischer Eigenerzeugeranlagen.

Die hoch verfügbaren Verbraucher umfassen dabei kritische Verbraucher, welche unterbrechungsfrei und welche mit Unterbrechungen von bis zu 15 Sekunden weiter versorgt werden können. Unter einer unterbrechungsfreien Versorgung werden dabei vorliegend auch Versorgungen mit Kurzunterbrechungen von deutlich weniger als 20 ms verstanden.

Die Verbraucher mit Versorgung ohne Unterbrechung werden von Einheiten zur unterbrechungsfreien Stromversorgung, im Folgenden USV-Einheiten genannt, unterschiedlicher Bauart, d. h. statisch oder dynamisch, versorgt. Diese USV-Einheiten und die Verbraucher, welche mit Unterbrechung weiterversorgt werden, werden bei Ausfall des Stromnetzes bzw. der Netzeinspeisung durch Hubkolbenverbrennungsmotoren oder andere Eigenerzeugeranlagen mit elektrischer Energie versorgt.

Um die Gesamtverfügbarkeit zu erhöhen, erfolgt in der Regel ein redundanter Aufbau der Eigenerzeugeranlagen. Aus wirtschaftlichen Gründen wird der redundante Aufbau meist mit einer N+1 Redundanz realisiert.

Darauf aufbauend existieren isoliert parallel geschaltete Versorgungsvorrichtungen mit parallel geschalteten dieseldynamischen unterbrechungsfreien Stromversorgungs-Anlagen. Bei diesen dieseldynamischen Anlagen erfolgt die unterbrechungsfreie Stromversorgung der kritischen Verbraucher durch einen Synchrongenerator, welcher zwischen dem elektrischen Netz und dem elektrischen Verbraucher durch eine elektrische, induktive Impedanz entkoppelt ist.

Der Synchrongenerator wird bei Netzbetrieb durch einen Synchronmotor angetrieben. Mittels eines Energiespeichers wird sichergestellt, dass bei einer Unterbrechung des Netzbetriebes bis zum Start des gekoppelten Dieselmotors das System weiter mit elektrischer Energie versorgt wird. Nach dem Start des Dieselmotors übernimmt dieser den Antrieb des Synchrongenerators, welcher unterbrechungsfrei die Last versorgt.

Aus der US 2008/0034256 A1 ist eine isoliert-parallele Vorrichtung zur unterbrechungsfreien Stromversorgung bekannt. Die Vorrichtung umfasst zwei dieselbetriebene USV-Anlagen, welche beide mit einer Niederspannung, Mittelspannung oder einer Kombination aus Nieder- und Mittelspannung arbeiten. Die USV-Anlagen sind zur elektrischen Versorgung von wichtigen und kritischen elektrischen Verbrauchern mit elektrischer Leistung von einem Stromnetz vorgesehen. Dabei sind die USV-Anlagen zum Betrieb als unabhängige Systeme ausgebildet, wobei jede USV-Anlage eine Drosselspule zur Konditionierung der aus dem Stromnetz erhaltenen elektrischen Leistung zur Nutzung für die kritischen Verbraucher und einen Dieselmotor umfasst, welcher zur dauerhaften Ersatzversorgung der kritischen und wichtigen Verbraucher mit elektrischer Energie bei Unterbrechung der Versorgung des Stromnetzes vorgesehen ist. Weiterhin umfassen die USV-Anlagen jeweils eine mit der Dieselmotor-Generator-Einheit gekoppelte Energiespeichereinrichtung, welche zur kurzzeitigen Ersatzversorgung der kritischen Verbraucher im Rahmen der unterbrechungsfreien Stromversorgung zwischen dem Zeitpunkt der Stromunterbrechung und dem Zeitpunkt des Startens der Dieselmotor-Generator-Einheit und dem Übernehmen der Ersatzversorgung durch diese vorgesehen ist. Weiterhin ist eine System-Schaltanlage für jede USV-Anlagen vorgesehen, welche die elektrische Versorgung der wichtigen und kritischen elektrischen Lasten beim Wechsel vom Stromnetz auf die USV-Anlage steuert. Weiterhin ist eine Ausgabe-Bus für jede USV-Anlage vorgesehen, welcher die elektrische Verbindung der Drosselspule und der Dieselmotor-Generator-Einheit mit den wichtigen und kritischen elektrischen Lasten steuert und die Übertragung von elektrischer Energie von und zum Stromnetz, von und zur Dieselmotor-Generator-Einheit und von und zur Drosselspule. Ferner ist eine adressierbare, mit dem Ausgabe-Bus einer USV-Anlage gekoppelte Drosselspule vorgesehen, welche einen Energiefluss von einem Ausgabe-Bus zu einem anderen Ausgabe-Bus steuert und einen Fehlerstrom zwischen den USV-Anlagen begrenzt und somit jede USV-Anlage von elektrischen Fehlern der anderen USV-Anlagen isoliert.

Weiterhin sind aus der WO 98/09359 A1 eine Vorrichtung und ein Verfahren zur Versorgung von elektrischen Lasten bekannt. Die Vorrichtung umfasst eine elektrisch leitfähige Verteilerschiene, welche mit zwei elektrischen Stromquellen und den elektrischen Lasten gekoppelt ist. Es sind zumindest drei schnelle Schutzschalter mit der Verteilerschiene gekoppelt und zur elektrischen Verbindung der Stromquellen miteinander und der elektrischen Lasten mit der Verteilerschiene sowie zum Betrieb innerhalb eines Stromkreises zur Unterbrechung elektrischer Fehlerströme vorgesehen.

Die DE 10 2007 021 089 B3 beschreibt eine Vorrichtung mit mehreren parallel geschalteten Ersatzstromquellen, wobei die Ersatzstromquellen eingangsseitig jeweils trennbar über eine Drossel mit einem Wechselstromnetz und ausgangsseitig mit einem gemeinsamen Lastbus verbunden sind. Eine von jeder einzelnen Ersatzstromquelle abgegebene Leistung ist veränderbar. Weiterhin ist eine Steuerung vorgesehen, die bei einem Ausfall des Wechselstromnetzes vom Ausfall betroffene Ersatzstromquellen von dem Wechselstromnetz trennt. Weiterhin ist die Steuerung dazu vorgesehen, nach dem Wiederkehren des Wechselstromnetzes die Ersatzstromquellen nacheinander wieder mit dem Wechselstromnetz zu verbinden und die von den einzelnen Ersatzstromquellen abgegebenen Leistungen aufeinander abzustimmen. Die Steuerung weist eine Einrichtung zum Bestimmen eines Phasenwinkels zwischen dem Wechselstromnetz und dem Lastbus auf. Weiterhin stellt die Steuerung zum aufeinander Abstimmen der von den einzelnen Ersatzstromquellen abgegebenen Leistungen, während ein Teil der Ersatzstromquellen eingangsseitig mit dem Wechselstromnetz verbunden und ein anderer Teil der Ersatzstromquellen eingangseitig nicht mit dem Wechselstromnetz verbunden ist, die von jeder der noch nicht wieder mit dem Wechselstromnetz verbundenen Ersatzstromquellen abgegebene Leistung in Abhängigkeit vom Phasenwinkel ein. Weiterhin ist ein Verfahren zur Steuerung mehrerer parallel geschalteter Ersatzstromquellen beschrieben.

Der Erfindung liegt die Aufgabe zugrunde, eine gegenüber dem Stand der Technik verbesserte Vorrichtung zur unterbrechungsfreien Stromversorgung von elektrischen Verbrauchern und ein verbessertes Verfahren zum Betrieb der Vorrichtung anzugeben.

Hinsichtlich der Vorrichtung wird die Aufgabe erfindungsgemäß durch die im Anspruch 1 angegebenen Merkmale und hinsichtlich des Verfahrens durch die im Anspruch 12 angegebenen Merkmale gelöst.

Vorteilhafte Ausgestaltungen der Erfindung sind Gegenstand der Unteransprüche.

Bei der Vorrichtung zur unterbrechungsfreien Stromversorgung von elektrischen Verbrauchern sind zumindest zwei voneinander unabhängige elektrische Eigenerzeugeranlagen elektrisch parallel verschaltet, wobei jede Eigenerzeugeranlage mit zumindest einer elektrischen Verbraucherschiene, umfassend zumindest einen elektrischen Verbraucheranschluss, gekoppelt ist.

Erfindungsgemäß sind zumindest zwei elektrische Schutzbereiche zur Isolierung elektrischer Fehler und mehrere Schutzbereiche mit Sofortauslösung zur elektrischen Parallelschaltung von Verbrauchernetzen, umfassend jeweils zumindest eine Verbraucherschiene, in einer gemeinsamen elektrischen Ringverbindung vorgesehen. Dabei schließen die Schutzbereiche mit Sofortauslösung jeweils zumindest eine Verbraucherschiene und einen zugehörigen Überbrückungszweig zur elektrischen Kopplung der Verbraucherschiene mit der Ringverbindung sowie einen Spulenzweig zur Kopplung einer in einer zweiten Ringrichtung benachbarten Verbraucherschiene mit der Ringverbindung ein. In der Ringverbindung ist zwischen jedem Schutzbereich mit Sofortauslösung und einem in einer ersten Ringrichtung benachbarten Schutzbereich mit Sofortauslösung und einem in einer zweiten Ringrichtung benachbarten Schutzbereich mit Sofortauslösung jeweils ein erstes Schaltelement mit einer Schaltzeit von weniger als 10 ms zur elektrischen Entkopplung der Verbraucherschienen ab einem vorgegebenen Spannungsfall (U%) der nach Anforderung der Last festgelegt wird, jedoch nicht höher als 30% an den Verbraucherschienen bzw. einem Summenfehlerstrom ab ca. 600%, insbesondere ab 600 %, in der Ringverbindung, bezogen auf einen Nennstrom, voneinander angeordnet ist.

Bei dem ersten Schaltelement des Schutzbereiches mit Sofortauslösung innerhalb von 10 ms handelt es sich insbesondere um ein Schaltgerät, welches zwei parallele Strompfade aufweist. Ein Hauptstrompfad für den Betriebsstrom von beispielsweise bis zu 5000 A. Nach einer insbesondere mittels einer analogen Differentialstromüberwachung durchgeführten Auslösung des Schaltgerätes im elektrischen Fehlerfall begrenzt ein parallel zu dem Hauptstrompfad geschaltetes Sicherungselement den Kurzschlussstrom im ersten Stromanstieg in weniger als 1 ms. Die gesamte Schaltzeit einschließlich der Fehlererkennung beträgt weniger als 10 ms.

Mittels der erfindungsgemäßen Vorrichtung wird erreicht, dass die Verbraucherschienen jeweils eine redundante elektrische Einspeisung aufweisen. Die redundante Einspeisung erfolgt zum einen von der jeweils mit der jeweiligen Verbraucherschiene gekoppelten Eigenerzeugeranlage und zum anderen mit den Eigenerzeugeranlagen der verbleibenden Verbraucherschienen über die Ringverbindung. Die elektrische Leistung jeder Eigenerzeugeranlage ist derart ausgebildet, das in der Vorrichtung, d. h. im Gesamtsystem, eine so genannte N+1-Leistungsredundanz vorhanden ist. Darunter ist zu verstehen, dass die elektrische Leistung aller elektrischen Verbraucher im Gesamtsystem bei einem Ausfall oder Nicht-Vorhanden-Sein einer Eigenerzeugeranlage mittels einer verbleibenden Eigenerzeugeranlage oder mehrerer verbleibender Eigenerzeugeranlagen versorgt wird.

Weiterhin ermöglicht die erfindungsgemäße Vorrichtung in besonders vorteilhafter Weise bei elektrisch parallel geschalteten Verbraucherschienen und parallel geschalteten Eigenerzeugeranlagen eine permanente redundante und unterbrechungsfreie Stromversorgung von an den Verbraucherschienen angeordneten elektrischen Verbrauchern. Die Vorrichtung ermöglicht dabei aufgrund der unterschiedlichen Schutzbereiche, der sehr schnellen Entkopplung der Verbraucherschienen bei einem elektrischen Fehler mittels der ersten Schaltelemente, dass auch bei auftretenden elektrischen Fehlern die erforderliche elektrische Verbraucherspannung im Gesamtsystem sichergestellt ist. Das heißt, es ist eine permanente redundante unterbrechungsfreie Stromversorgung sichergestellt.

Die Vorrichtung ist in einer Weiterbildung derart ausgebildet, dass in den Schutzbereichen vorhandene Leistungsschalter und Schaltelemente mit einer Schaltzeit von weniger als 10 ms in Abhängigkeit von einem Fehlerort zusätzlich auch in Abhängigkeit einer Fehlerstärke steuerbar sind. Unter der Fehlerstärke wird hierbei insbesondere eine Höhe eines Fehler- oder Kurzschlussstromes verstanden. Somit kann ein Abschalten eines mit einem elektrischen Fehler behafteten Bereichs in Abhängigkeit des Fehlerortes und der Fehlerstärke anhand der Leistungsschalter und Schaltelemente in unterschiedlichen Trennzeiten erfolgen.

Aufgrund der Aufteilung des Schutzkonzeptes in Schutzbereiche mit Sofortauslösung und Trennzeiten, welche je nach Fehlerort und Fehlerstärke die unterschiedlichen Leistungsschalter und Schaltelemente, d. h. unterschiedliche Trennarten, aktivieren, ist eine segmentweise Entkopplung der Verbraucherschienen voneinander sichergestellt. Somit kann sich ein elektrischer Fehler in einem Schutzbereich oder Schutzbereich mit Sofortauslösung nicht negativ auf die Verbraucherschienen und auf die elektrische Versorgung der kritischen Verbraucher auswirken und es wird ein segmentgeschützter Parallelbus, im Englischen segment protected parallel-bus (kurz: SPP-Bus), gebildet.

Besonders bevorzugt umfassen die Schutzbereiche mit Sofortauslösung jeweils einen Überbrückungszweig einer Verbraucherschiene und jeweils zumindest teilweise einen elektrisch parallel mit diesem verschalteten Spulenzweig einer in der zweiten Ringrichtung benachbart angeordneten Verbraucherschiene, wobei jeweils eine Verbraucherschiene über eine in dem Spulenzweig angeordnete Kurzschlussstrombegrenzungsspule mit der Ringverbindung und elektrisch parallel zu zumindest einer weiteren Verbraucherschiene verschaltet ist. Aufgrund der ausgelegten Impedanz der Kurzschlussstrombegrenzungsspule und der sehr geringe Schaltzeit der Leistungsschalter der Schutzbereiche von vorzugsweise weniger als 40 ms wird bei einem elektrischen Kurzschluss an einer der Verbraucherschienen sichergestellt, dass die elektrisch Spannung an den anderen Verbraucherschienen innerhalb notwendiger Toleranzen bleibt.

Gegenüber den aus dem Stand der Technik bekannten Lösungen ist es in besonders vorteilhafter Weise möglich, das Problem der Schwachstelle in derartigen parallel geschalteten Systemen, welche die elektrische Verbindung zwischen den Systemen bildet, zu beseitigen. Aufgrund der Ausführung der Kurzschlussstrombegrenzungsspulen kombiniert mit den erfindungsgemäßen Schutzbereichen ist es möglich, bei genügend hohen Werten der Impedanzen in den Kurzschlussstrombegrenzungsspulen sicherzustellen, dass eine Spannungsqualität an den nicht vom elektrischen Fehler betroffenen Verbraucherschienen in einem für die Verbraucher akzeptablen Bereich bleibt. Nach dem Stand der Technik ist es jedoch nicht möglich, bei elektrischen Kurzschlüssen mit sehr großen Kurzschlussströmen an der eigentlichen elektrischen Verbindung zwischen den Verbrauchernetzen die erforderliche Impedanz stabil sicherzustellen. Der Grund hierfür ist, dass sich im Normalbetrieb der Verbraucherschiene abhängig von der Induktivität der Kurzschlussstrombegrenzungsspule und abhängig vom Leistungsfaktor bzw. Wirkfaktor "cos ϕ" der elektrischen Verbraucher die Versorgungsspannung negativ verändert.

Die Vorrichtung ermöglicht jedoch aufgrund der segmentweisen Entkopplung mittels des ersten Schaltelements mit der Schaltzeit von weniger als 10 ms, dass bei diesen Kurzschlüssen mit den hohen Kurzschlussströmen innerhalb eines Schutzbereiches mit Sofortauslösung die Verbraucherspannung in einem akzeptablen Bereich gehalten wird. Für impedanzbehaftete Fehler, welche weniger Wirkung auf die Verbraucherspannung zeigen, werden vorzugsweise die Leistungsschalter der Schutzbereiche innerhalb von weniger als 40 ms ausgelöst. Damit ist sichergestellt, dass die Verbraucherspannung an den nichtbetroffenen Verbraucherschienen in einer für die elektrischen Verbraucher akzeptablen Toleranz, insbesondere nach der EN 50160, VDE 0150 oder der EDV-Industrie spezifischen ITIC(CBEMA)-Kurve eingehalten wird. Zusätzlich ermöglichen die Schutzbereiche, dass die nicht von einem elektrischen Fehler betroffenen Verbraucherschienen jedoch aufgrund des erfindungsgemäßen Aufbaus der Vorrichtung nicht isoliert werden. Somit ist bei einem elektrischen Fehler in der Ringverbindung zwischen den Verbraucherschienen und einer daraus resultierenden Isolation des Fehlers innerhalb eines Schutzbereiches mit Sofortauslösung dennoch die elektrische Versorgung der Verbraucherschienen sichergestellt.

Aufgrund der segmentweisen Isolation der Verbrauchszweige ist es weiterhin gegenüber kostenintensiven Vorrichtungen mit N+N-Redundanzen aus dem Stand der Technik möglich, dass eine Wartung der Eigenerzeugeranlagen durchgeführt werden kann, ohne die unterbrechungsfreie Stromversorgung der Verbraucherschienen zu unterbrechen.

Gemäß einer besonders bevorzugten Weiterbildung der erfindungsgemäßen Vorrichtung ist im Spulenzweig der Kurzschlussstrombegrenzungsspule vor dieser ein erster Leistungsschalter angeordnet. Nach der Kurzschlussstrombegrenzungsspule ist ein Spulenverbindungsknoten des Spulenzweiges in die erste Ringrichtung mit einem zweiten Leistungsschalter und in die zweite Ringrichtung mit einem dritten Leistungsschalter elektrisch mit der Ringverbindung gekoppelt, wobei der elektrisch parallel zu der jeweiligen Kurzschlussstrombegrenzungsspule geschaltete Überbrückungszweig mit einem vierten Leistungsschalter zur Überbrückung der jeweiligen Kurzschlussstrombegrenzungsspule mit der Verbraucherschiene und über einen Überbrückungsknoten mit der gemeinsamen elektrischen Ringverbindung gekoppelt ist. Der vierte Leistungsschalter ist dafür vorgesehen, den Spulenzweig zu überbrücken, damit der sich abhängig vom Leistungsfaktor bzw. Wirkfaktor "cos ϕ" der elektrischen Verbraucher einstellende Spannungsfall der Versorgungsspannung an der Verbraucherschiene bei Leistungsübernahme durch den redundanten Versorgungsweg über die Kurzschlussstrombegrenzungsspule im Spulenzweig vermieden wird. Dieser vierte Leistungsschalter ist in eine Ansteuerung der Schutzbereiche mit eingebunden, so dass das Zuschalten des vierten Leistungsschalters nicht in einen mit einem elektrischen Fehler behafteten Schutzbereich mit Sofortauslösung erfolgt.

Zwischen dem Überbrückungsknoten und dem dritten Leistungsschalter ist jeweils eines der ersten Schaltelemente angeordnet. Diese Ausgestaltung der erfindungsgemäßen Vorrichtung ermöglicht einerseits, dass ein Spannungseinbruch an den vom Fehler nicht betroffenen Verbraucherschienen im Fehlerfall in einem der Schutzbereiche mit Sofortauslösung in der Zeit von weniger als 10 ms nicht zu einem für den Verbraucher negativen Spannungseinbruch führt. Andererseits ist eine besonders einfache Realisierung des Schutzkonzepts mit geringem Aufwand möglich.

In einer Weiterbildung der erfindungsgemäßen Vorrichtung umfassen die Schutzbereiche einen ersten Schutzbereich, welcher jeweils eine Eigenerzeugeranlage und ein zweites Schaltelement mit einer Schaltzeit von weniger als 10 ms zur elektrischen Entkopplung der jeweiligen Eigenerzeugeranlage von der zugehörigen Verbraucherschienen umfasst. Somit ist auch die Eigenerzeugeranlage bei einem elektrischen Fehler in den Schutzbereich mit Sofortauslösung oder in der Eigenerzeugeranlage selbst von den Verbraucherschienen entkoppelbar, so dass sich der elektrische Fehler nicht negativ auf die nicht betroffenen Verbraucherschienen und Eigenerzeugeranlagen auswirkt.

Das zweite Schaltelement ist dabei vorzugsweise in gleicher Weise ausgebildet wie das erste Schaltelement.

In einer Ausgestaltung der erfindungsgemäßen Vorrichtung umfassen die Schutzbereiche einen als Leitungs-Differentialschutzbereich ausgebildeten zweiten Schutzbereich, welcher zwischen dem ersten Leistungsschalter, dem zweiten Leistungsschalter und dem dritten Leistungsschalter ausgebildet ist. Die Leitungsschalter weisen dabei insbesondere eine Schaltzeit von weniger als 40 ms beim Auftreten von elektrischem Fehler in dem Leistungs-Differentialschutzbereich auf. Somit ist es möglich, dass ein Spannungseinbruch an den vom elektrischen Fehler nicht betroffenen Verbraucherschienen bei einem Fehler im zweiten Schutzbereich in der Zeit von weniger als 40 ms nicht zu einem für den Verbraucher negativen Spannungseinbruch führt.

Ferner umfassen die Schutzbereiche einen als Leitungs-Differentialschutzbereich ausgebildeten dritten Schutzbereich, welcher zwischen dem vierten Leistungsschalter, dem dritten Leistungsschalter und dem zweiten Leistungsschalter eines in der der zweiten Ringrichtung benachbart angeordneten Verbrauchernetzes ausgebildet ist. Auch hierbei weisen die Leistungsschalter insbesondere eine Schaltzeit von weniger als 40 ms beim Auftreten von elektrischem Fehler in dem Leitungs-Differentialschutzbereich auf. Somit ist es möglich, dass ein Spannungseinbruch an den vom elektrischen Fehler nicht betroffenen Verbraucherschienen bei einem Fehler im dritten Schutzbereich in der Zeit von weniger als 40 ms nicht zu einem für den Verbraucher negativen Spannungseinbruch führt.

Um weiterhin auch die Schutzbereiche und die Entkopplung der Schutzbereiche mit Sofortauslösung unabhängig voneinander zu realisieren, sind die in den Schutzbereichen vorhandenen Leistungsschalter und zweiten Schaltelemente unabhängig voneinander und unabhängig von den ersten Schaltelementen steuerbar sind.

Gemäß einer vorteilhaften Weiterbildung der Vorrichtung ist die Parallelschaltung der Verbraucherschienen sternförmig in der Ringverbindung ausgebildet. Dies ermöglicht einen einfachen Aufbau der Vorrichtung sowie eine einfache elektrische Verschaltung und Steuerung aller Komponenten der Verbrauchernetze.

Bevorzugt ist zwischen den Eigenerzeugeranlagen eine redundante Kommunikationsverbindung für einen Infonnationsaustausch ausgebildet, so dass Informationen über einen aktuellen Zustand der Eigenerzeugeranlagen sowie über einen Lastabgleich an alle Eigenerzeugeranlagen übermittelt werden können. Weiterhin ist es möglich, dass bei einer Unterbrechung einer Kommunikationsverbindung eine Störmeldung erfolgen kann. Auch wird ermöglicht, dass bei einem Ausfall der Kommunikation eines Verbraucherzweiges die zugehörige Eigenerzeugeranlage vom parallel geschalteten Verbund durch Öffnen des ersten Leistungsschalters und Sperren des geöffneten vierten Leistungsschalters isoliert wird. Dadurch ist eine Funktion der verbleibenden Verbraucherschienen im Parallelverbund sichergestellt und die Eigenerzeugeranlage mit der Störung versorgt die zugehörige Verbraucherschiene als Insel mit Verlust der Redundanz über den Parallelverbund weiter. Aufgrund des erfindungsgemäßen Aufbaus der Vorrichtung befindet sich die Verbraucherspannung an den Verbraucherschienen auch in dieser Betriebssituation im für die elektrischen Verbraucher tolerierbaren Bereich.

In einer vorteilhaften Ausgestaltung der erfindungsgemäßen Vorrichtung sind die Eigenerzeugeranlagen dieseldynamische USV-Einheiten, welche mit einem gemeinsamen elektrischen Versorgungsnetz gekoppelt sind.

Dabei sind die Eigenerzeugeranlagen zwischen dem Versorgungsnetz und der jeweiligen Verbraucherschiene angeordnet und mittels einer ersten induktiven Impedanz und einer zweiten induktiven Impedanz vom Versorgungsnetz entkoppelt ist. Somit können sich Störungen im vorgelagerten Versorgungsnetz nicht auf die Verbraucherschienen übertragen und umgekehrt.

Die Eigenerzeugeranlagen sind beispielsweise als Einheiten zur unterbrechungsfreien Stromversorgung ausgebildet und umfassen jeweils einen Synchrongenerator, welcher zwischen dem Versorgungsnetz der jeweiligen Verbraucherschiene angeordnet und mittels der ersten induktiven Impedanz und der zweiten induktiven Impedanz vom vorgelagerten Versorgungsnetz entkoppelt ist.

In zweckmäßiger Weise ist der Synchrongenerator im Netzbetrieb des elektrischen Verbrauchers mit einem Synchronmotor gekoppelt und mittels diesem antreibbar.

Besonders bevorzugt ist der Synchrongenerator bei einer Unterbrechung des Netzbetriebes mit einer Verbrennungskraftmaschine gekoppelt und mittels dieser antreibbar.

Um die unterbrechungsfreie Stromversorgung der Verbraucher im Zeitraum zwischen der Unterbrechung des Netzbetriebes bis zum Start der gekoppelten Verbrennungskraftmaschine sicher zu stellen, ist der Synchrongenerator in diesem Zeitraum mit einem Energiespeicher gekoppelt und mittels elektrischer Energie aus dem Energiespeicher antreibbar.

In einer weiteren Ausgestaltung der Vorrichtung ist den Eigenerzeugeranlagen kein Versorgungsnetz vorgelagert. In dieser Ausgestaltung im Parallelverbund der Eigenerzeugeranlagen entfällt die Entkopplung über die erste und zweite Impedanzen und die Ausführung der Eigenerzeugeranlage mit einer Einheit aus Verbrennungskraftmaschine und Synchrongenerator.

In einer weiteren Ausgestaltung der Vorrichtung sind an den Verbraucherschienen elektrische Verbraucher angeordnet, welche über zwei voneinander unabhängige Einspeisungen verfügen. Dabei wird eine erste, so genannte A-Versorgung dieser Verbraucher von der zugeordneten Eigenerzeugeranlage und/oder dem zugeordneten Versorgungsnetz übernommen. Eine zweite, so genannte B-Versorgung wird aus einer parallel geschalteten Eigenerzeugeranlage und/oder dem Versorgungsnetz übernommen. Die Aufteilung aller elektrischen Verbraucher erfolgt in der Art, dass eine gleichmäßige Lastverteilung auf alle Verbraucherschienen und deren zugeordnete elektrische Netze gegeben ist.

In dem Verfahren zum Betrieb der erfindungsgemäßen Vorrichtung werden erfindungsgemäß zumindest zwei elektrisch parallel verschaltete Verbraucherschienen, welche mit jeweils einer elektrischen Eigenerzeugeranlage gekoppelt sind und jeweils zumindest einen elektrischen Verbraucher umfassen, bei einer Unterbrechung der elektrischen Verbindung zu der zugehörigen Eigenerzeugeranlage mittels einer zur jeweils anderen Verbraucherschiene gehörigen Eigenerzeugeranlage unterbrechungsfrei mit elektrischer Energie versorgt. Bei einem elektrischen Fehler in einem elektrischen Spulenzweig einer Kurzschlussstrombegrenzungsspule, über welche die Verbraucherschienen jeweils mit einer gemeinsamen elektrischen Ringverbindung und elektrisch parallel zueinander verschaltet sind, wird mittels eines in einem zweiten Schutzbereich angeordneten ersten, zweiten und dritten Leistungsschalters der betroffene Spulenzweig von der zugehörigen Verbraucherschiene und der Ringverbindung entkoppelt. Erfindungsgemäß wird bei einem elektrischen Fehler in einem elektrisch parallel zu dem Spulenzweig geschalteten Überbrückungszweig der Überbrückungszweig mittels eines in einem dritten Schutzbereich angeordneten vierten Leistungsschalters, eines dritten Leistungsschalters und eines zweiten Leistungsschalters eines in der der zweiten Ringrichtung benachbart angeordneten Verbrauchernetzes von der zugehörigen Verbraucherschiene und der Ringverbindung entkoppelt. Bei Auftreten zumindest einer der elektrischen Fehler werden in Abhängigkeit von einer Höhe eines Fehlerstromes innerhalb der Ringverbindung die Verbraucherschienen vom Spulenzweig und/oder vom Überbrückungszweig, in welchem bzw. welchen der elektrische Fehler vorliegt, mittels jeweils zwei in der Ringverbindung angeordneten Schaltelementen mit einer Schaltzeit von weniger als 10 ms ab einem vorgegebenen Spannungsfall (U%) der nach Anforderung der Last festgelegt wird, jedoch nicht höher als 30% an den Verbraucherschienen bzw. einem Summenfehlerstrom ab ca. 600%, insbesondere ab 600 %, in der Ringverbindung, bezogen auf einen Nennstrom, elektrisch entkoppelt.

Das erfindungsgemäße Verfahren zum Betrieb der erfindungsgemäßen Vorrichtung und deren Ausgestaltungen stellt sicher, dass insbesondere bei sehr hohen Strömen von 600% des Nennstromes innerhalb von maximal 10 ms der vom elektrischen Fehler betroffene Schutzbereich mit Sofortauslösung von den parallel verbundenen Verbrauchernetzen isoliert wird. Bei geringeren Fehlerströmen von beispielsweise bis zu 200% des Nennstromes wird der Fehlerort vorzugsweise innerhalb von nicht mehr als 40 ms isoliert, ohne dass die Verbraucherspannung an den nicht vom Fehler betroffenen Verbraucherschienen negativ beeinflusst wird.

Ausführungsbeispiele der Erfindung werden im Folgenden anhand von Zeichnungen näher erläutert.

Darin zeigen:
- Figuren 1A und 1B: schematisch ein elektrisches Schaltbild eines ersten Ausführungsbeispiels der erfindungsgemäßen Vorrichtung mit vier elektrischen Verbraucherschienen und vier Eigenerzeugeranlagen, die mit einem elektrischen Versorgungsnetz gekoppelt sind,
- Figuren 2A und 2B: schematisch ein weiteres elektrisches Schaltbild des ersten Ausführungsbeispiels der erfindungsgemäßen Vorrichtung gemäß den Figuren 1A und 1B,
- Figur 3: schematisch ausschnittsweise ein elektrisches Schaltbild eines zweiten Ausführungsbeispiels der Vorrichtung mit vier Verbraucherschienen zum Anschluss von Verbrauchern mit zwei unabhängigen elektrischen Einspeisungen,
- Figuren 4A und 4B: schematisch ein elektrisches Schaltbild eines dritten Ausführungsbeispiels der erfindungsgemäßen Vorrichtung mit vier elektrischen Verbraucherschienen und vier Eigenerzeugeranlagen ohne gekoppeltes elektrisches Versorgungsnetz,
- Figuren 5A und 5B: schematisch ein weiteres elektrisches Schaltbild des dritten Ausführungsbeispiels der erfindungsgemäßen Vorrichtung gemäß den Figur 4A und 4B, und
- Figur 6: schematisch einen Vergleich eines Stromverlaufs in einer elektrischen Ringverbindung der Vorrichtung und eines Spannungsfalls an den Verbraucherschienen der Vorrichtung nach der Erfindung mit Werten nach dem Stand der Technik.

Einander entsprechende Teile sind in allen Figuren mit den gleichen Bezugszeichen versehen.

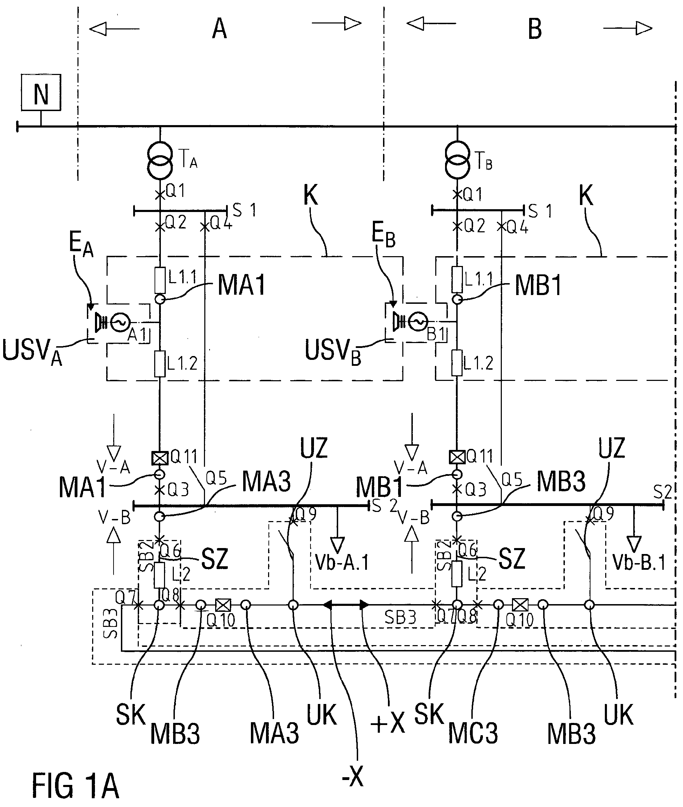

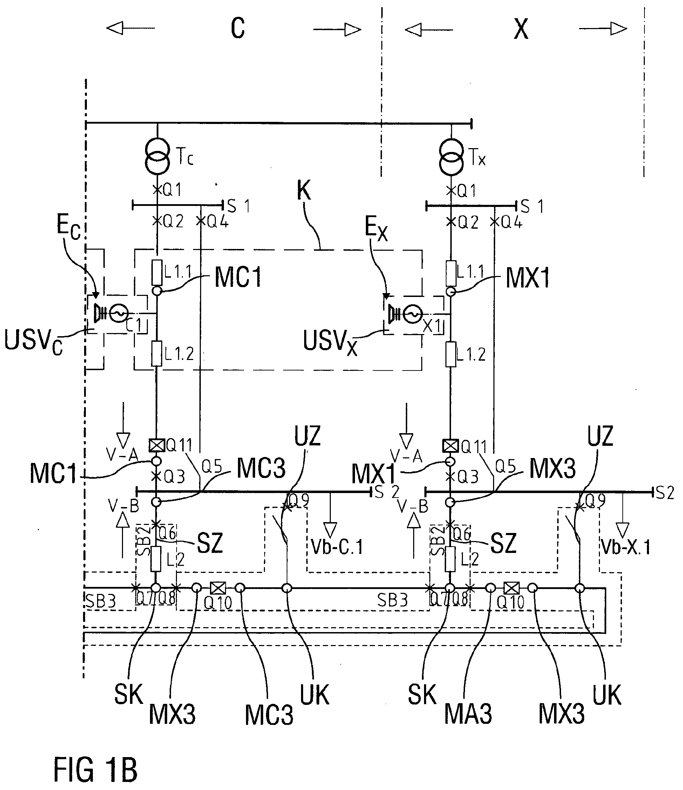

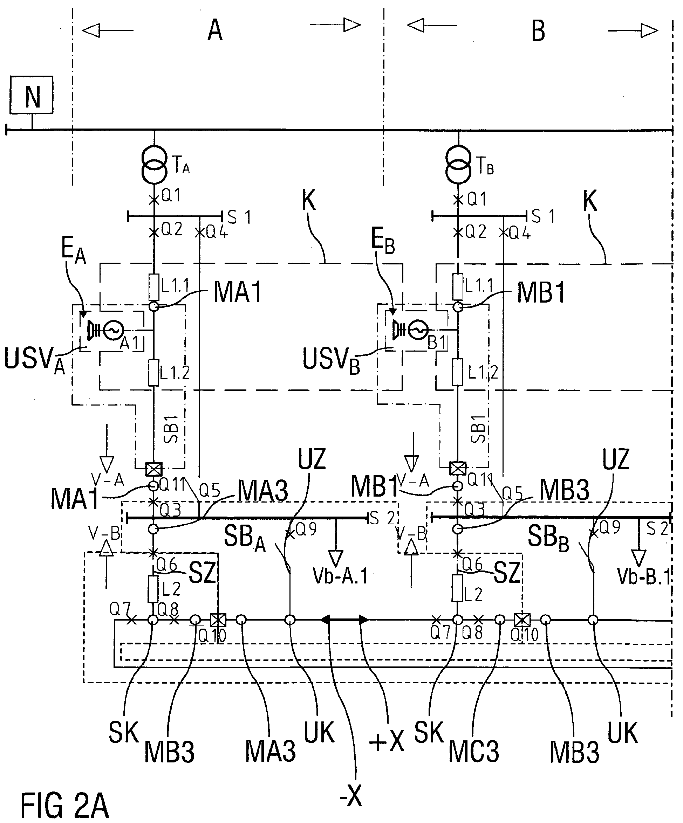

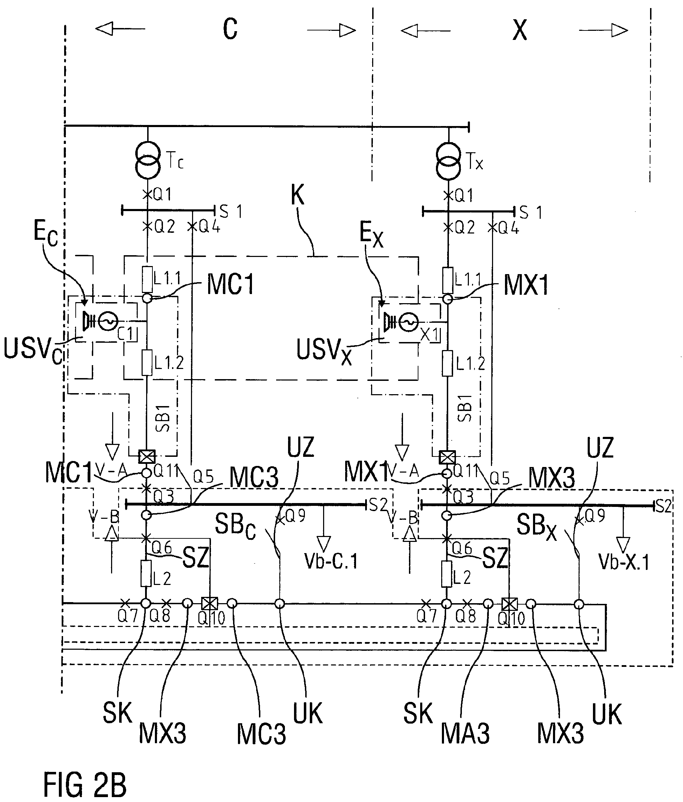

In den **Figuren 1A** **und** **1B** **sowie 2A und 2B** sind jeweils elektrische Schaltbilder eines ersten Ausführungsbeispiels einer erfindungsgemäßen Vorrichtung 1 zur unterbrechungsfreien Stromversorgung mit vier elektrisch parallel geschalteten elektrischen Eigenerzeugeranlagen E_{A}, E_{B}, E_{C}, E_{X} in elektrischen Verbrauchernetzen A, B, C, X dargestellt.

Die Parallelschaltung erfolgt sternförmig in einer Ringstruktur. Jedes Verbrauchernetz A, B, C, X verfügt dabei über jeweils ein Schutzbereich SB_{A} ,SB_{B}, SBc, SB_{X} mit Sofortauslösung, im Folgenden auch als vierter Schutzbereich SB_{A},SB_{B}, SB_{C}, SB_{X} bezeichnet.

Weiterhin umfasst jedes Verbrauchernetz A, B, C, X eine Verbraucherschiene S2, welche einerseits durch die jeweils zugehörige Eigenerzeugeranlage E_{A}, E_{B}, E_{C}, E_{X} und andererseits über eine Kurzschlussstrombegrenzungsspule L2 durch die Eigenerzeugeranlage E_{A}, E_{B}, E_{C}, E_{X} der benachbarten Verbrauchernetze A, B, C, X elektrisch versorgt wird.

Die dargestellte Vorrichtung 1 findet insbesondere bei der elektrischen Versorgung von so genannten hoch verfügbaren elektrischen Verbrauchern in industriell oder gewerblich genutzten Niederspannungsanlagen bis 1 kV und Mittelspannungsanlagen bis 36 kV Anwendung. Relevante Anwendung findet die Vorrichtung 1 dabei insbesondere in Netzersatzanlagen, in Anlagen zur Eigengeneration von elektrischer Energie, in Blockheizkraftwerken oder in Anlagen zur unterbrechungsfreien Stromversorgung, welche Synchronmaschinen zur Erzeugung elektrischer Energie umfassen und über Impedanzen elektrisch parallel betrieben werden können.

Im dargestellten Ausführungsbeispiel sind die Eigenerzeugeranlagen E_{A}, E_{B}, E_{C}, E_{X} Einheiten USV_{A}, USV_{B}, USV_{C}, USV_{X} zur unterbrechungsfreien Stromversorgung, im Folgenden als USV-Einheit USV_{A}, USV_{B}, USV_{C}, USV_{X} bezeichnet, welche Synchronmaschinen zur Erzeugung elektrischer Energie umfassen.

In nicht näher dargestellten Ausführungsbeispielen können die Eigenerzeugeranlagen E_{A}, E_{B}, E_{C}, E_{X} auch in beliebig anderer Art und Weise ausgebildet sein, beispielsweise als Blockheizkraftwerk.

In ebenfalls nicht dargestellten Ausführungsbeispielen umfasst die Vorrichtung 1 eine abweichende Anzahl von parallel verschalteten Verbrauchernetzen A, B, C, X, jedoch mindestens zwei. Die Anzahl der Verbrauchernetze A, B, C, X bzw. ist dabei von einer Kurzschlussfestigkeit von in den Verbrauchernetzen A, B, C, X angeordneten Betriebsmittel abhängig.

Jedes der Verbrauchernetze A, B, C, X umfasst jeweils einen mit einem elektrischen Versorgungsnetz N gekoppelten Transformator T_{A}, T_{B}, T_{C}, T_{X} zur Transformation der Netzspannung in eine Betriebsspannung. Das Versorgungsnetz N ist vorzugsweise ein Niederspannungs- oder ein Mittelspannungsnetz.

Die Transformatoren T_{A}, T_{B}, T_{C}, T_{X} sind jeweils mittels eines Leistungsschalters Q1 mit einer Verteilerschiene S1 gekoppelt. An der Verteiler schiene S1 verzweigt sich ein elektrischer Pfad, wobei in einem ersten Zweig jeweils eine USV-Einheit USV_{A}, USV_{B}, USV_{C}, USV_{X} angeordnet ist.

Die USV-Einheiten USV_{A}, USV_{B}, USV_{C}, USV_{X} umfassen jeweils Synchrongenerator mit einem nicht gezeigten Synchronmotor mit einem Energiespeicher. Im Netzbetrieb wird der Synchrongenerator mit dem Synchronmotor gekoppelt und wird mittels diesem angetrieben. Bei einer Unterbrechung des Netzbetriebes wird Synchrongenerator mit einer Verbrennungskraftmaschine, insbesondere einem dieselbetriebenen Hubkolbenverbrennungsmotor gekoppelt und wird mittels diesem angetrieben.

Zur Sicherstellung einer unterbrechungsfreien Stromversorgung wird der Synchrongenerator im Zeitraum zwischen der Unterbrechung des Netzbetriebes bis zum Start der gekoppelten Verbrennungskraftmaschine mit einem Energiespeicher gekoppelt und mittels elektrischer Energie aus dem Energiespeicher angetrieben.

Die Eigenerzeugeranlagen E_{A}, E_{B}, E_{C}, E_{X}, d. h. die USV-Einheiten USV_{A}, USV_{B}, USV_{C}, USV_{X}, sind mittels einer redundanten Kommunikationsverbindung K für einen Informationsaustausch zwischen den USV-Einheiten USV_{A}, USV_{B}, USV_{C}, USV_{X} miteinander verbunden. Über die Kommunikationsverbindung K werden Informationen über einen aktuellen Zustand der USV-Einheiten USV_{A}, USV_{B}, USV_{C}, USV_{X} sowie über einen Lastabgleich an alle USV-Einheiten USV_{A}, USV_{B}, USV_{C}, USV_{X} übermittelt. Weiterhin erfolgt bei einer Unterbrechung einer Kommunikationsverbindung K eine Stönneldung. Aufgrund des redundanten Aufbaus der Kommunikationsverbindung K ist sichergestellt, dass sich bei Kommunikationsunterbrechungen die betroffene USV-Einheit USV_{A}, USV_{B}, USV_{C}, USV_{X} eigenständig von den übrigen USV-Einheiten USV_{A}, USV_{B}, USV_{C}, USV_{X} isoliert, ohne das nachfolgend angeordnete elektrische Verbraucher Vb-A.1 bis Vb-A.3, Vb-B.1 bis Vb-B.3, Vb-C.1 bis Vb-C.3, Vb-X.1 bis Vb-X.3 negativ beeinträchtigt werden.

Die USV-Einheiten USV_{A}, USV_{B}, USV_{C}, USV_{X} sind jeweils mittels einer ersten induktiven Impedanz L1.1, d. h. einer Eingangsdrossel, vom vorgelagerten Versorgungsnetz N entkoppelt.

Weiterhin ist eine zweite induktive Impedanz L1.2, d. h. eine Ausgangsdrossel L1.2, zur weiteren Entkopplung einer nachfolgenden Verbraucherschiene S2 von den USV-Einheiten USV_{A}, USV_{B}, USV_{C}, USV_{X} vorgesehen.

Zur Entkopplung und Einkopplung des jeweiligen Zweiges mit der USV-Einheit USV_{A}, USV_{B}, USV_{C}, USV_{X} ist dieser mittels zwei Leistungsschaltern Q2, Q3 mit dem zugehörigen Verbrauchernetz A, B, C, X gekoppelt. Zum Kurzschluss des Zweiges mit der USV-Einheit USV_{A}, USV_{B}, USV_{C}, USV_{X} ist parallel zu diesem ein weiterer Zweig geschaltet, welches ebenfalls zwei Leistungsschalter Q4, Q5 zur Einkopplung und Entkopplung aufweist.

Die Verbraucherschienen S2 sind, wie in den Figuren 2A und 2B näher dargestellt, jeweils mit mehreren elektrischen Verbrauchern Vb-A.1 bis Vb-A.3, Vb-B.1 bis Vb-B.3, Vb-C.1 bis Vb-C.3, Vb-X.1 bis Vb-X.3 gekoppelt. Dabei sind in dem in den Figuren 2A und 2B dargestellten Ausführungsbeispiel der Vorrichtung 1 zwei voneinander unabhängige Einspeisungen für jeden Verbraucher Vb-A.1 bis Vb-A.3, Vb-B.1 bis Vb-B.3, Vb-C.1 bis Vb-C.3, Vb-X.1 bis Vb-X.3 vorgesehen.

Die Verbraucherschienen S2 sind dabei jeweils über eine in einem Spulenzweig SZ befindliche Kurzschlussstrombegrenzungsspule L2 mit einer gemeinsamen elektrischen Ringverbindung R und elektrisch parallel zueinander verschaltet. Über diesen Spulenzweig SZ erfolgt die eine Versorgung V-B der redundanten Vorsorgung der Verbraucherschiene S2. Eine weitere Versorgung V-A, welche die Hauptversorgung der Verbraucherschiene S2 dargestellt, erfolgt über die jeweilige USV-Einheit USV_{A}, USV_{B}, USV_{C}, USV_{X} im Verbrauchernetz A, B, C, X.

In dem Spulenzweig SZ der Kurzschlussstrombegrenzungsspule L2 ist vor dieser ein erster Leistungsschalter Q6 angeordnet. Nach der Kurzschlussstrombegrenzungsspule L2 ist der Spulenzweig SZ über einen Spulenverbindungsknoten SK elektrisch mit der Ringverbindung R gekoppelt.

Zu dieser Kopplung ist ausgehend vom Spulenverbindungsknoten SK in eine erste Ringnchtung -X ein zweiter Leistungsschalter Q7 und in eine zweite Ringrichtung +X ein dritter Leistungsschalter Q8 vorgesehen.

Elektrisch parallel zu den Kurzschlussstrombegrenzungsspulen L2 ist jeweils ein Überbrückungszweig UZ mit einem vierten Leistungsschalter Q9 zur Überbrückung der jeweiligen Kurzschlussstrombegrenzungsspule L2 mit der Verbraucherschiene S2 und über einen Überbrückungsknoten UK mit der gemeinsamen elektrischen Ringverbindung R gekoppelt.

Ferner ist in der Ringverbindung R jeweils zwischen dem Überbrückungsknoten UK und dem dritten Leistungsschalter Q8 ein Schaltelement Q10 mit einer Schaltzeit von weniger als 10 ms zur elektrischen Entkopplung der Verbrauchernetze A, B, C, X voneinander angeordnet.

Bei dem ersten Schaltelement Q10 handelt es sich insbesondere um ein Schaltgerät, welches zwei parallele Strompfade aufweist. Ein Hauptstrompfad für den Betriebsstrom von beispielsweise bis zu 5000 A. Nach einer insbesondere mittels einer analogen Differentialstromüberwachung durchgeführten Auslösung eines Hauptstrompfades des ersten Schaltgerätes Q10 im elektrischen Fehlerfall begrenzt ein parallel zu dem Hauptstrompfad geschaltetes nicht gezeigtes Sicherungselement den Kurzschlussstrom im ersten Stromanstieg in weniger als 1 ms. Die gesamte Schaltzeit einschließlich der Fehlererkennung beträgt weniger als 10 ms.

Bei einem Fehlerstrom von ca. 600%, bezogen auf den Nennstrom des jeweiligen Verbrauchernetzes A, B, C, X, werden durch eine eigene Schutztechnik in den vierten Schutzbereichen SB_{A}, SB_{B}, SB_{C}, SB_{X} zwei, den jeweiligen vierten Schutzbereich SB_{A}, SB_{B}, SB_{C}, SB_{X} einschließende erste Schaltgeräte Q10 und der erste Leistungsschalter Q6 derart angesteuert, dass der mit dem Fehler behaftete vierte Schutzbereich SB_{A}, SB_{B}, SB_{C}, SB_{X} von den nicht mit dem Fehler behafteten parallel verbundenen Verbrauchernetzen A, B, C, X entkoppelt wird.

Somit werden von den nachgeschalteten Verbraucherschienen S2 die zugeordneten elektrischen Verbraucher Vb-A.1 bis Vb-A.3, Vb-B.1 bis Vb-B.3, Vb-C.1 bis Vb-C.3, Vb-X.1 bis Vb-X.3 für das zugeordnete Verbrauchernetz A, B, C, X unterbrechungsfrei versorgt. Ein zweiter Versorgungszweig für die Verbraucher Vb-A.1 bis Vb-A.3, Vb-B.1 bis Vb-B.3, Vb-C.1 bis Vb-C.3, Vb-X.1 bis Vb-X.3 wird von den benachbarten Verbrauchernetzen A, B, C, X übernommen.

Bei Ausfall einer USV-Einheit USV_{A}, USV_{B}, USV_{C}, USV_{X} oder bei Ausfall des vorgelagerten Versorgungsnetzes N einer USV-Einheit USV_{A}, USV_{B}, USV_{C}, USV_{X} wird die Verbraucherschiene S2 über die Kurzschlussstrombegrenzungsspulen L2 aus den benachbarten Verbrauchernetzen A, B, C, X versorgt. Während dieser Zeit ergibt sich an der Verbraucherschiene S2 ein Spannungsfall der von dem Leistungsfaktor "cos ϕ" des jeweiligen Verbraucher Vb-A.1 bis Vb-A.3, Vb-B.1 bis Vb-B.3, Vb-C.1 bis Vb-C.3, Vb-X.1 bis Vb-X.3 abhängig ist.

Mit dem Kriterium, dass an der betroffenen Verbraucherschiene S2 kein Fehler vorhanden ist, wird beim Ausfall einer USV-Einheit USV_{A}, USV_{B}, USV_{C}, USV_{X} der vierte Leistungsschalter Q9 umgehend geschlossen. Das Schließen des vierten Leistungsschalters Q9 bewirkt das Überbrücken der Kurzschlussstrombegrenzungsspule L2. Bis zum Zeitpunkt der Überbrückung stellt sich der Spannungsfall an der Verbraucherschiene S abhängig vom Leistungsfaktor cos (p ein. Nachdem der vierte Leistungsschalter Q9 geschlossen ist, verringert sich dieser Spannungsfall mit der Anzahl von Verbrauchernetzen A, B, C, X, die in der Vorrichtung 1 vorhanden sind.

Die Umschaltungen und Steuerungen erfolgen dabei für jedes Verbrauchernetzen A, B, C, X separat und segmentbezogen und ohne Beeinflussung untereinander.

In der Betriebssituation mit Ausfall einer USV-Einheit USV_{A}, USV_{B}, USV_{C}, USV_{X} bleibt, wie zuvor beschrieben, die Verbraucherspannung unterbrechungsfrei über die Kurzschlussstrombegrenzungsspule L2 und anschließend über den Leistungsschalter Q9 versorgt. Somit ist auch in Wartungssituationen für die USV-Einheiten USV_{A}, USV_{B}, USV_{C}, USV_{X} und am vorgelagerten Versorgungsnetz N sichergestellt, dass permanent die redundante Versorgung V-A, V-B, d. h. die so genannte A- und B-Versorgung der elektrischen Verbraucher Vb-A.1 bis Vb-A.3, Vb-B.1 bis Vb-B.3, Vb-C.1 bis Vb-C.3, Vb-X.1 bis Vb-X.3 sichergestellt ist.

Bei den elektrischen Verbrauchern Vb-A.1 bis Vb-A.3, Vb-B.1 bis Vb-B.3, Vb-C.1 bis Vb-C.3, Vb-X.1 bis Vb-X.3 handelt es sich um so genannte hoch verfügbare Verbraucher, bei welchen eine Stromversorgung stets und unterbrechungsfrei sichergestellt sein. Die erfindungsgemäße Vorrichtung 1 ermöglicht dabei in besonders vorteilhafter Weise, dass die unterbrechungsfreie Stromversorgung stets in redundanter Ausbildung zur Verfügung gestellt werden kann.

Dies wird durch den Einsatz mehrerer Trennarten und durch die Schutzbereiche SB1 bis SB3 und die vierten Schutzbereichen SB_{A}, SB_{B}, SB_{C}, SB_{X} mit verschiedenen Schaltzeiten in jedem Verbrauchernetz A, B, C, X erreicht.

Hierzu weist jedes Verbrauchernetz A, B, C, X einen ersten Schutzbereich SB1 auf. Innerhalb dieses Schutzbereichs SB1 wird mittels eines zweiten Schaltelements Q11 in weniger als 10 ms die jeweilige USV-Einheit USV_{A}, USV_{B}, USV_{C}, USV_{X} bei einem elektrischen Fehler von der zugehörigen Verbraucherschiene S2 getrennt. Das zweite Schaltelement Q11 ist dabei vorzugsweise entsprechend dem ersten Schaltelement Q10 ausgebildet.

Weiterhin weist jedes Verbrauchernetz A, B, C, X einen vierten Schutzbereich SB_{A}, SB_{B}, SB_{C}, SB_{X} mit Sofortauslösung auf. Jeder vierte Schutzbereich SB_{A} ,SB_{B}, SB_{C}, SB_{X} umfasst dabei den Überbrückungszweig UZ einer Verbraucherschiene S2 sowie den Spulenzweig SZ mit dem ersten Leistungsschalter Q6 einer in der zweiten Ringrichtung +X benachbart angeordneten Verbraucherschiene S2 und ist randseitig auf der Ringverbindung R durch jeweils ein erstes Schaltelement Q10 begrenzt.

Weiterhin sind zwei weitere Schutzbereiche SB2, SB3 vorgesehen. Ein zweiter Schutzbereich SB2 wird durch einen ersten Leitungs-Differentialschutzbereich gebildet. Dieser ist zwischen dem ersten Leistungsschalter Q6, dem zweiten Leistungsschalter Q7 und dem dritten Leistungsschalter Q8 einer Verbraucherschiene S2 ausgebildet. Tritt ein elektrischer Fehler mit einem Fehlerstrom von ca. 200%, bezogen auf den Nennstrom im jeweiligen Verbrauchernetz A, B, C, X, innerhalb des ersten Leitungs-Differentialschutzbereichs auf, so werden die Leistungsschalter Q6, Q7, Q8 des fehlerbehafteten zweiten Schutzbereichs SB2 geöffnet und somit der elektrische Fehler isoliert. Da die Leistungsschalter Q6, Q7, Q8 vorzugsweise eine Schaltzeit von weniger als 40 ms aufweisen, wird der elektrische Fehler innerhalb von maximal 40 ms isoliert.

Weiterhin weist jedes Verbrauchernetz A, B, C, X einen dritten Schutzbereich SB3 auf, welcher durch einen zweiten Leitungs-Differentialschutzbereich gebildet ist. Dieses ist zwischen dem vierten Leistungsschalter Q9, dem dritten Leistungsschalter Q8 und dem zweiten Leistungsschalter Q7 einer jeweils in der zweiten Ringrichtung +X benachbart angeordneten Verbraucherschiene S2 ausgebildet. Tritt ein elektrischer Fehler mit einem Fehlerstrom von ca. 200%, bezogen auf den Nennstrom im jeweiligen Verbrauchernetz A, B, C, X, innerhalb des zweiten Leitungs-Differentialschutzbereichs auf, so werden die Leistungsschalter Q8, Q9 und der Leistungsschalter Q7 der benachbart angeordneten Verbraucherschiene S2 geöffnet und somit der elektrische Fehler, vorzugsweise ebenfalls innerhalb von maximal 40 ms, isoliert.

Die Schutzbereiche SB2 und SB3 mit einer Schaltzeit von weniger al 40 ms sind zur Wahrung der Übersichtlichkeit ausschließlich in den Figuren 1A und 1B dargestellt. Die Figuren 2A und 2B zeigen dagegen, ebenfalls zur Wahrung der Übersichtlichkeit die vierten Schutzbereiche SB_{A}, SB_{B}, SB_{C}, SB_{X} mit Sofortauslösung und der Schutzbereich SB1 mit einer Schaltzeit von weniger als 10 ms, jedoch nicht die Schutzbereiche SB2 und SB3. Das beschriebene Ausführungsbeispiel der Vorrichtung 1 umfasst jedoch sowohl die Schutzbereiche SB1 bis SB3 als auch die vierten Schutzbereiche SB_{A}, SB_{B}, SB_{C}, SB_{X} mit Sofortauslösung.

Zur Erfassung von elektrischen Fehlern sind mehrere nicht gezeigte Messeinheiten vorgesehen, wobei zur Erfassung der Fehler im ersten Schutzbereich SB1 mittels der Messeinheiten an Messstellen MA1, MB1, MC1, MX1 Stromwerte erfasst und nach allgemein bekannten Verfahren zur Realisierung des Leitungs-Differentialschutzes miteinander verglichen werden. Die Erfassung der Fehler, die zum Auslösen der ersten Schutzgeräte Q10, welches einen der vierten Schutzbereiche SB_{A}, SB_{B}, SB_{C}, SB_{X} einschließen, erfolgt unter anderem mittels Messeinheiten an Messstellen MA3, MB3, MC3, MX3 mittels einer Erfassung von Stromweiten, welche nach allgemein bekannten Verfahren zur Realisierung des Leitungs-Differentialschutzes miteinander verglichen werden.

Die Messstellen für den dritten Schutzbereich SB3 sind dabei nicht dargestellt.

Alle in den Schutzbereichen SB1 bis SB3 und zum Schutz der vierten Schutzbereiche SB_{A}, SB_{B}, SB_{C}, SB_{X} vorhandenen elektrischen Schaltgeräte sind dabei unabhängig voneinander steuerbar.

Um beim Auftreten eines Kurzschlusses mit sehr hohen Kurzschlussströmen in einem Verbrauchernetz A, B, C, X die Versorgungsspannung an den Verbraucherschienen S2 innerhalb einer für die Verbraucher Vb-A.1 bis Vb-A.3, Vb-B.1 bis Vb-B.3, Vb-C.1 bis Vb-C.3, Vb-X.1 bis Vb-X.3 akzeptablen Toleranz zu halten, ist ein zusätzliches Schutzkonzept vorgesehen. Dieses wird mit den ersten Schaltgeräten Q10 realisiert.

Beim Auftreten derartiger Fehler erfolgt eine vollständige Entkopplung des jeweiligen vierten Schutzbereiches SB_{A}, SB_{B}, SB_{C}, SB_{X} von den parallel verbundenen Verbrauchernetzen A, B, C, X mittels jeweils zwei ersten Schaltgeräten Q10 und dem ersten Leistungsschalter Q6 innerhalb von maximal 10 ms. Dabei ist sichergestellt, dass einschließlich der Erkennungszeit des Fehlers innerhalb von weniger als 10 ms der vom Fehler betroffene vierte Schutzbereich SB_{A}, SB_{B}, SB_{C}, SB_{X} vollständig isoliert wird.

Jeder der vierten Schutzbereiche mit Sofortauslösung SB_{A}, SB_{B}, SB_{C}, SB_{X} ist dabei in jede der Ringrichtungen (-X, +X) eingeschlossen von den Schaltelementen Q10 mit zusätzlicher Ansteuerung des ersten Leitungsschalters Q6 bei geschlossener Verbindung in den vom Fehler behafteten vierten Schutzbereich SB_{A}, SB_{B}, SB_{C}, SB_{X}. Es werden jeweils zwei erste Schaltelemente Q10 und der betroffene erste Leistungsschalter Q6 durch eine Überwachungssteuerung des jeweiligen Verbrauchernetzes A, B, C, X bzw. vierten Schutzbereiches SB_{A}, SB_{B}, SB_{C}, SB_{X} angesteuert.

Die Leistungsschalter Q6 bis Q9 sowie die ersten Schaltgeräte Q10 und die zweiten Schaltgeräte Q11 sind dabei unabhängig voneinander steuerbar.

Somit ist sichergestellt, dass bei einem elektrischen Fehler, insbesondere einem elektrischen Kurzschluss, die Verbraucherspannung zu jedem Zeitpunkt in einem akzeptierbaren Bereich bleibt. Zusätzlich bleibt bei einem Kurzschluss oder Fehler auf der Ringverbindung R zwischen den Verbrauchernetzen A, B, C, X die redundante elektrische Versorgung der Verbraucher Vb-A.1 bis Vb-A.3, Vb-B.1 bis Vb-B.3, Vb-C.1 bis Vb-C.3, Vb-X.1 bis Vb-X.3 erhalten.

Daraus folgend ist es wie bei den USV-Einheiten USV_{A}, USV_{B}, USV_{C}, USV_{X} möglich, dass sich bei elektrischen Fehlern das betroffene Verbrauchernetz A, B, C, X eigenständig von den übrigen Verbrauchernetzen A, B, C, X isoliert, ohne das die nachfolgend angeordneten elektrischen Verbraucher Vb-A.1 bis Vb-A.3, Vb-B.1 1 bis Vb-B.3, Vb-C.1 bis Vb-C.3, Vb-X.1 bis Vb-X.3 negativ beeinträchtigt werden.

Bei einem Ausfall der Kommunikation eines Verbrauchernetzes A, B, C, X wird die zugehörige USV-Einheit USV_{A}, USV_{B}, USV_{C}, USV_{X} vom parallel geschalteten Verbund durch Öffnen des ersten Leistungsschalters Q6 und Schließen des vierten Leistungsschalters Q9 isoliert. Dadurch ist eine Funktion der verbleibenden Verbraucherschienen S2 im Parallelverbund sichergestellt und die USV-Einheit USV_{A}, USV_{B}, USV_{C}, USV_{X} mit der Störung versorgt die zugehörige Verbraucherschiene S2 im Inselbetrieb. Aufgrund des erfindungsgemäßen Aufbaus der Vorrichtung 1 befindet sich die Verbraucherspannung an den Verbraucherschienen S2 auch in dieser Betriebssituation im für die elektrischen Verbraucher Vb-A.1 bis Vb-A.3, Vb-B.1 bis Vb-B.3, Vb-C.1 bis Vb-C.3, Vb-X.1 bis Vb-X.3 tolerierbaren Bereich.

Im Folgenden werden Kennwerte einer beispielhaften Konfiguration der Vorrichtung 1, wobei jede Verbraucherschiene S2 mit einer Leistung von 1,2 MVA belastet ist und insgesamt vier über eine Ringverbindung parallel gekoppelte Verbrauchernetze A, B, C, X, vorgesehen sind.

Die Kennwerte der Betriebsmittel sind wie folgt:
- Transformatoren T_{A}, T_{B}, T_{C}, T_{X}: S =2,5 MVA, U_{K}: 6%,
- USV-Generator: S = 2 MVA, x"_d = 10,08%,
- Erste induktive Impedanz L1.1: U_{K} = 34,17%,
- Zweite induktive Impedanz L1.2: U_{K} = 0,95%,
- Kurzschlussstrombegrenzungsspule L2: U_{K} = 25%,
- Gesamtsystemleistung pro Verbrauchernetze A, B, C, X: S = 2MVA,
- Verbraucherlast S = 1,2 MVA bei Leistungsfaktor cos ϕ = 0,95,
mit U_{K} = Bemessungswert der Kurzschlussspannung eines Transformators T_{A}, T_{B}, T_{C}, Tx in %, x"_d = subtransiente Reaktanz einer Synchronmaschine in der Längs- oder Querachse und S = Scheinleistung.

Nach der VDE 0102 ergeben sich bei einem 3-poligen Kurzschluss an einer Verbraucherschiene S2 Spannungseinbrüche an den nichtbetroffenen Verbraucherschienen S2 von weniger als 10%. Die Fehlerabschaltzeit mit herkömmlichen Niederspannungsschaltern sind dabei kleiner 40 ms.

Bei Fehlern an der elektrischen Verbindung zwischen den Verbrauchernetze A, B, C, X bei einem 3-poligen Kurzschluss ergibt sich ein Spannungseinbruch an den Verbraucherschienen S2 von ca. 32% für weniger als 10 ms.

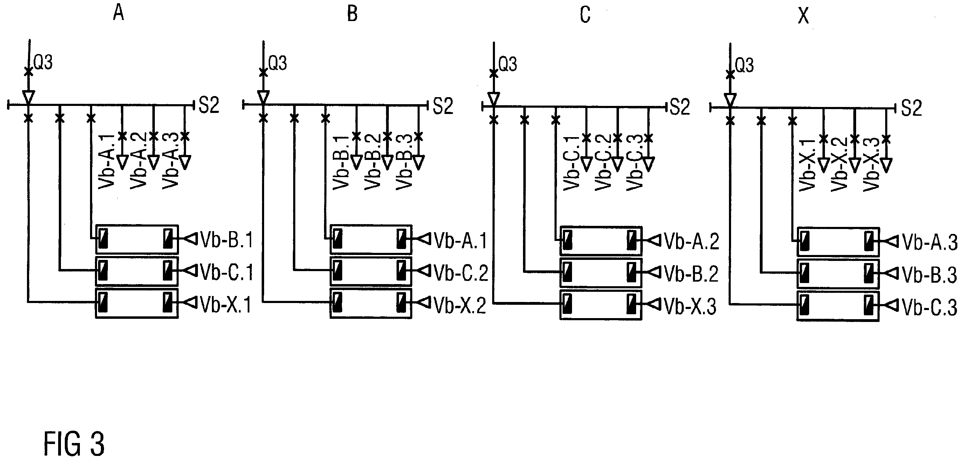

**Figur 3** zeigt ausschnittsweise ein zweites Ausführungsbeispiel der Vorrichtung 1, wobei die elektrischen Verbraucher Vb-A.1 bis Vb-A.3, Vb-B.1 bis Vb-B.3, Vb-C.1 bis Vb-C.3, Vb-X.1 bis Vb-X.3 mit zwei unabhängigen Einspeisungen elektrisch versorgt werden.

Dabei werden Ausschnitte der vier elektrischen Verbrauchernetze A, B, C, X im Bereich der vier Verbraucherschienen S2 gezeigt. Jede Verbraucherschiene S2 ist zur elektrischen Versorgung von jeweils drei elektrischen Verbrauchern Vb-A.1 bis Vb-A.3, Vb-B.1 bis Vb-B.3, Vb-C.1 bis Vb-C.3, Vb-X.1 bis Vb-X.3 ausgebildet.

Weiterhin ist zur redundanten Versorgung der elektrischen Verbraucher Vb-A.1 bis Vb-A.3, Vb-B.1 bis Vb-B.3, Vb-C.1 bis Vb-C.3, Vb-X.1 bis Vb-X.3 zusätzlich jeweils ein elektrischer Verbraucher Vb-A.1 bis Vb-A.3, Vb-B.1 bis Vb-B.3, Vb-C.1 bis Vb-C.3, Vb-X.1 bis Vb-X.3 jedes parallel geschalteten Verbraucheunetzes A, B, C, X mit elektrischer Energie aus den "benachbarten" Verbrauchernetzen A, B, C, X versorgbar.

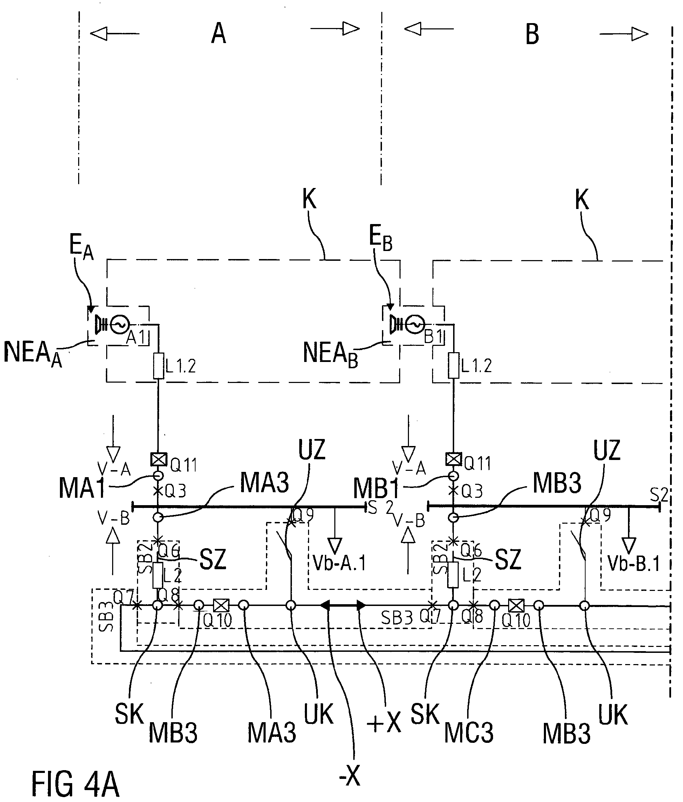

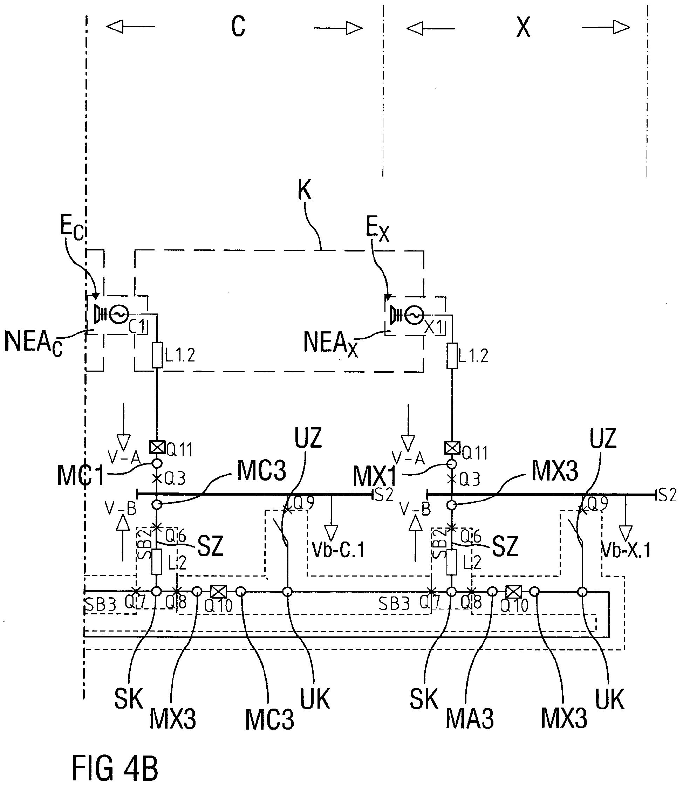

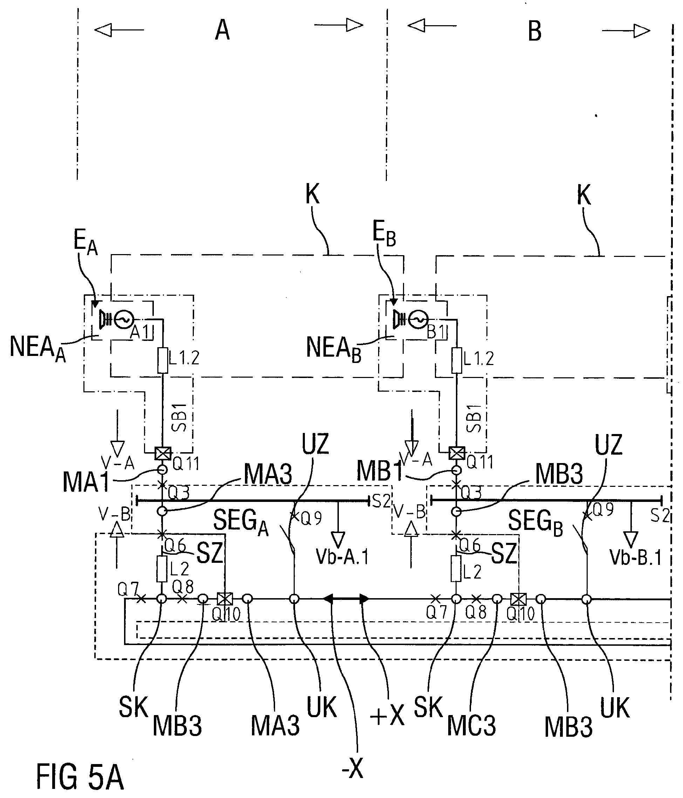

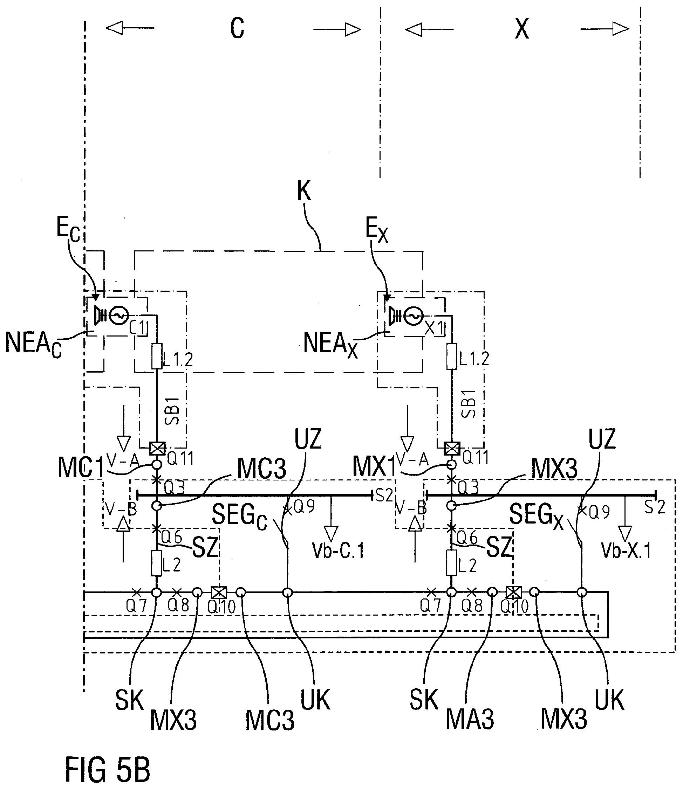

In den **Figuren 4A** **und** **4B** **sowie 5A und 5B** ist ein drittes Ausführungsbeispiel der Vorrichtung 1 dargestellt, wobei die Eigenerzeugeranlagen E_{A}, E_{B}, E_{C}, E_{X} als Einheit NEA_{A}, NEA_{B}, NEA_{C}, NEA_{X} zur unterbrechungsfreien Stromversorgung ohne Netzeinspeisung ausgebildet sind. Der weitere Aufbau, die Unterteilung in die Schutzbereiche mit Sofortauslösung SB_{A}, SB_{B}, SB_{C}, SB_{X} und die Unterteilung in die Schutzbereiche SB1 bis SB3 entsprechen dem in den Figuren 1A und 1B sowie 2A und 2B dargestellten ersten Ausführungsbeispiel.

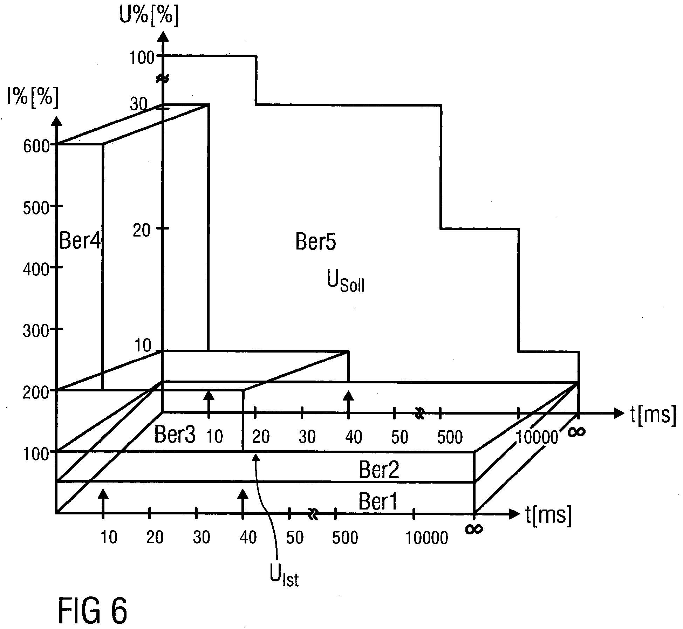

**Figur 6** zeigt eine Gegenüberstellung zwischen einer nach dem Stand der Technik akzeptierbaren Soll-Verbraucherspannung U_{Soll} und der sich bei Störung oder elektrischem Fehler einstellenden Ist-Verbraucherspannung U_{Ist} bei der Vorrichtung 1.

Die Soll-Verbraucherspannung U_{Soll} und die Ist-Verbraucherspannung U_{Ist} sind dabei als Spannungsfall U% an den Verbraucherschienen S2 in Abhängigkeit von der Zeit t dargestellt.

Weiterhin ist der elektrische Strom I% in % in der Ringverbindung R zwischen den Verbrauchernetzen A, B, C, X bezogen auf einen Nennstrom des jeweiligen Verbrauchernetzes A, B, C, X in Abhängigkeit von der Zeit t dargestellt.

Ein erster Bereich Ber1 zeigt dabei einen Normalbetrieb der Ringverbindung R mit einer Aufteilung des Nennstromes in 2 mal 50%. Der Spannungsfall U% beträgt in diesem Fall an der Verbraucherschiene S2 ohne Erzeuger 6%.

Ein zweiter Bereich Ber2 zeigt einen Betrieb der Ringverbindung R als offenen Ring mit einem Nennstrom von 100%. Auch hierbei beträgt der Spannungsfall U% an der Verbraucherschiene S2 ohne Erzeuger 6%.

Ein dritter Bereich Ber3 stellt einen Betrieb der Ringverbindung R als geschlossener Ring mit einem Fehlerstrom von 200%, bezogen auf den Nennstrom, dar. Dabei beträgt der Spannungsfall U% an der Verbraucherschiene S2 10% für maximal 40 ms, da der elektrische Fehler nach maximal 40 ms mittels des zweiten Schutzbereiches SB2 oder dritten Schutzbereiches SB3 je nach Ort des Fehlers und Betriebssituation isoliert wird.

Ein vierter Bereich Ber4 stellt einen Betrieb der Ringverbindung R als geschlossener Ring mit einem Fehlerstrom von 600%, bezogen auf den Nennstrom, dar. Dabei beträgt der Spannungsfall U% an der Verbraucherschiene S2 ca. 30% für maximal 10 ms, da mittels der Schaltgeräte Q10 das betroffenen Verbrauchernetz A, B, C, X nach maximal 10 ms mittels der ersten Schalteinheiten Q10 isoliert wird.

Ein fünfter Bereich Ber5 zeigt dagegen den nach dem Stand der Technik akzeptierbaren Spannungsfall U% an der Verbraucherschiene S2.

Aus der Darstellung der Figur 6 wird ersichtlich, dass mittels der erfindungsgemäßen Vorrichtung 1, dem Verfahren zu dessen Betrieb und den jeweiligen Ausführungsbeispielen in besonders vorteilhafter Weise eine signifikante Unterschreitung des akzeptierbaren Spannungsfalls U% an der Verbraucherschiene S2 gegenüber dem Stand der Technik erzielt werden kann.

### BEZUGSZEICHENLISTE

- 1: Vorrichtung
- A, B, C, X: Verbrauchernetz
- Ber1: erster Bereich
- Ber2: zweiter Bereich
- Ber3: dritter Bereich
- Ber4: vierter Bereich
- Ber5: fünfter Bereich
- E_{A}, E_{B}, E_{C}, E_{X}: Eigenerzeugeranlage
- I%: Strom
- K: Kommunikationsverbindung
- L1.1: erste induktive Impedanz
- L1.2: zweite induktive Impedanz
- L2: Kurzschlussstrombegrenzungsspule
- MA1, MB1, MC1, MX1: Messstelle
- MA3, MB3, MC3, MX3: Messstelle
- N: Versorgungsnetz
- NEA_{A}, NEA_{B}, NEA_{C}, NEA_{X}: Einheit zur unterbrechungsfreien Stromversorgung
- T_{A}, T_{B}, T_{C}, T_{X}: Transformator
- Q1 bis Q5: Leistungsschalter
- Q6: erster Leistungsschalter
- Q7: zweiter Leistungsschalter
- Q8: dritter Leistungsschalter
- Q9: vierter Leistungsschalter
- Q10: erstes Schaltelement
- Q11: zweites Schaltelement
- R: Ringverbindung
- SB1 bis SB3: Schutzbereich
- SB_{A}, SB_{B}, SB_{C}, SB_{X}: Schutzbereich mit Sofortauslösung
- SK: Spulenverbindungsknoten
- SZ: Spulenzweig
- S1: Verteilerschiene
- S2: Verbraucherschiene
- t: Zeit
- U_{Ist}: Ist-Verbraucherspannung
- U_{Soll}: Soll-Verbraucherspannung
- UK: Überbrückungsknoten
- USV_{A}, USV_{B}, USV_{C}, USV_{X}: Einheit zur unterbrechungsfreien Stromversorgung
- UZ: Überbrückungszweig
- U%: Spannungsfall
- V-A, V-B: Versorgung
- Vb-A.1 bis Vb-A.3: elektrischer Verbraucher
- Vb-B.1 bis Vb-B.3: elektrischer Verbraucher
- Vb-C.1 bis Vb-C.3: elektrischer Verbraucher
- Vb-X.1 1 bis Vb-X.3: elektrischer Verbraucher
- -X: erste Ringrichtung
- +X: zweite Ringrichtung

## Patentansprüche

1. Vorrichtung (1) zur unterbrechungsfreien Stromversorgung von elektrischen Verbrauchern (Vb-A.1 bis Vb-A.3, Vb-B.1 bis Vb-B.3, Vb-C.1 bis Vb-C.3, Vb-X.1 bis Vb-X.3), wobei zumindest zwei voneinander unabhängige elektrische Eigenerzeugeranlagen (E_{A}, E_{B}, E_{C}, E_{X}) elektrisch parallel verschaltet sind, wobei jede Eigenerzeugeranlage (E_{A}, E_{B}, E_{C}, E_{X}) mit zumindest einer elektrischen Verbraucherschiene (S2), umfassend zumindest einen elektrischen Verbraucheranschluss, gekoppelt ist,
**dadurch gekennzeichnet, dass** zumindest zwei elektrische Schutzbereiche (SB1 bis SB3) zur Isolierung elektrischer Fehler und mehrere Schutzbereiche (SB_{A}, SB_{B}, SB_{C}, SB_{X}) mit Sofortauslösung zur elektrischen Parallelschaltung von Verbrauchernetzen (A, B, C, X), umfassend jeweils zumindest eine Verbraucherschiene (S2), in einer gemeinsamen elektrischen Ringverbindung (R) vorgesehen sind, wobei die Schutzbereiche (SB_{A}, SB_{B}, SB_{C}, SB_{X}) mit Sofortauslösung jeweils zumindest eine Verbraucherschiene (S2) und einen zugehörigen Überbrückungszweig (UZ) zur elektrischen Kopplung der Verbraucherschiene (S2) mit der Ringverbindung (R) sowie einen Spulenzweig (SZ) zur Kopplung einer in einer zweiten Ringrichtung (+X) benachbarten Verbraucherschiene (S2) mit der Ringverbindung (R) einschließen und wobei in der Ringverbindung (R) zwischen jedem Schutzbereich (SB_{A}, SB_{B}, SB_{C}, SB_{X}) mit Sofortauslösung und einem in einer ersten Ringrichtung (-X) benachbarten Schutzbereich (SB_{A}, SB_{B}, SB_{C}, SB_{X}) mit Sofortauslösung und einem in einer zweiten Ringrichtung (+X) benachbarten Schutzbereich (SB_{A}, SB_{B}, SB_{C}, SB_{X}) mit Sofortauslösung jeweils ein erstes Schaltelement (Q10) mit einer Schaltzeit von weniger als 10 ms zur elektrischen Entkopplung der Verbraucherschienen (S2) ab einem vorgegebenen Spannungsfall (U%) der nach Anforderung der Last festgelegt wird, jedoch nicht höher als 30% an den Verbraucherschienen (S2) bzw. einem Summenfehlerstrom ab ca. 600% in der Ringverbindung (R), bezogen auf einen Nennstrom, voneinander angeordnet ist.

2. Vorrichtung (1) nach Anspruch 1,
**dadurch gekennzeichnet, dass** die Verbrauchernetze (A, B, C, X) jeweils einen Überbrückungszweig (UZ) einer Verbraucherschiene (S2) und jeweils zumindest teilweise einen elektrisch parallel mit diesem verschalteten Spulenzweig (SZ) einer in der zweiten Ringrichtung (+X) benachbart angeordneten Verbraucherschiene (S2) umfassen, wobei jeweils eine Verbraucherschiene (S2) über eine in dem Spulenzweig (SZ) angeordnete Kurzschlussstrombegrenzungsspule (L2) mit der Ringverbindung (R) und elektrisch parallel zu zumindest einer weiteren Verbraucherschiene (S2) verschaltet ist.

3. Vorrichtung (1) nach Anspruch 2,
**dadurch gekennzeichnet, dass** im Spulenzweig (SZ) der Kurzschlussstrombegrenzungsspule (L2) vor dieser ein erster Leistungsschalter (Q6) angeordnet ist und nach der Kurzschlussstrombegrenzungsspule (L2) ein Spulenverbindungsknoten (SK) des Spulenzweiges (SZ) in die erste Ringrichtung (-X) mit einem zweiten Leistungsschalter (Q7) und in die zweite Ringrichtung (+X) mit einem dritten Leistungsschalter (Q8) elektrisch mit der Ringverbindung (R) gekoppelt ist, wobei der elektrisch parallel zu der jeweiligen Kurzschlussstrombegrenzungsspule (L2) geschaltete Überbrückungszweig (UZ) mit einem vierten Leistungsschalter (Q9) zur Überbrückung der jeweiligen Kurzschlussstrombegrenzungsspule (L2) mit der Verbraucherschiene (S2) und über einen Überbrückungsknoten (UK) mit der gemeinsamen elektrischen Ringverbindung (R) gekoppelt ist, wobei zwischen dem Überbrückungsknoten (UK) und dem dritten Leistungsschalter (Q8) jeweils eines der ersten Schaltelemente (Q10) angeordnet ist.

4. Vorrichtung (1) nach einem der vorhergehenden Ansprüche,
**dadurch gekennzeichnet, dass** die Schutzbereiche (SB1 bis SB3) einen ersten Schutzbereich (SB1) umfassen, welcher jeweils eine Eigenerzeugeranlage (E_{A}, E_{B}, E_{C}, E_{X}) und ein zweites Schaltelement (Q11) mit einer Schaltzeit von weniger als 10 ms zur elektrischen Entkopplung der jeweiligen Eigenerzeugeranlage (E_{A}, E_{B}, E_{C}, E_{X}) von der zugehörigen Verbraucherschienen (S2) umfasst.

5. Vorrichtung (1) nach Anspruch 3 oder 4,
**dadurch gekennzeichnet, dass** die Schutzbereiche (SB 1 bis SB3) einen als Leitungs-Differentialschutzbereich ausgebildeten zweiten Schutzbereich (SB2) umfassen, welcher zwischen dem ersten Leistungsschalter (Q6), dem zweiten Leistungsschalter (Q7) und dem dritten Leistungsschalter (Q8) ausgebildet ist, und dass die Schutzbereiche (SB1 bis SB3) einen als Leitungs-Differentialschutzbereich ausgebildeten dritten Schutzbereich (SB3) umfassen, welcher zwischen dem vierten Leistungsschalter (Q9), dem dritten Leistungsschalter (Q8) und dem zweiten Leistungsschalter (Q7) eines in der der zweiten Ringrichtung (+X) benachbart angeordneten Verbrauchernetzes (A, B, C, X) ausgebildet ist.

6. Vorrichtung (1) nach einem der vorhergehenden Ansprüche,
**dadurch gekennzeichnet, dass** die in den Schutzbereichen (SB1 bis SB3) vorhandenen Leistungsschalter (Q6 bis Q9) und zweiten Schaltelemente (Q11) unabhängig voneinander und unabhängig von den ersten Schaltelementen (Q10) steuerbar sind.

7. Vorrichtung (1) nach einem der vorhergehenden Ansprüche,
**dadurch gekennzeichnet, dass** die in den Schutzbereichen (SB2, SB3) vorhandenen Leistungsschalter (Q6 bis Q9) und Schaltelemente (Q10, Q11) in Abhängigkeit von einem Fehlerort und in Abhängigkeit einer Fehlerstärke steuerbar sind.

8. Vorrichtung (1) nach einem der vorhergehenden Ansprüche,
**dadurch gekennzeichnet, dass** die Parallelschaltung der Verbraucherschienen (S2) sternförmig in der Ringverbindung (R) ausgebildet ist.

9. Vorrichtung (1) nach einem der vorhergehenden Ansprüche,
**dadurch gekennzeichnet, dass** zwischen den Eigenerzeugeranlagen (E_{A}, E_{B}, E_{C}, E_{X}) eine redundante Kommunikationsverbindung (K) für einen Informationsaustausch ausgebildet ist, wobei bei einer Unterbrechung der Kommunikation ein zu der jeweiligen Eigenerzeugeranlage (E_{A}, E_{B}, E_{C}, E_{X}) gehörige Verbraucherschiene (S2) isoliert und in einem Inselbetrieb betreibbar ist.

10. Vorrichtung (1) nach einem der vorhergehenden Ansprüche,
**dadurch gekennzeichnet, dass** die Eigenerzeugeranlagen (E_{A}, E_{B}, E_{C}, E_{X}) mit einem gemeinsamen elektrischen Versorgungsnetz (N) gekoppelt sind.

11. Vorrichtung (1) nach Anspruch 10,
**dadurch gekennzeichnet, dass** die Eigenerzeugeranlagen (E_{A}, E_{B}, E_{C}, E_{X}) zwischen dem Versorgungsnetz (N) und der jeweiligen Verbraucherschiene (S2) angeordnet sind und mittels einer ersten induktiven Impedanz (L1.1) und einer zweiten induktiven Impedanz (L1.2) vom Versorgungsnetz (N) entkoppelt sind.

12. Verfahren zum Betrieb der Vorrichtung (1) nach einem der vorhergehenden Ansprüche,
**dadurch gekennzeichnet, dass** zumindest zwei elektrisch parallel verschaltete Verbraucherschienen (S2), welche mit jeweils einer elektrischen Eigenerzeugeranlage (E_{A}, E_{B}, E_{C}, E_{X}) gekoppelt sind und wobei zumindest eine der Verbraucherschienen (S2) mit zumindest einem elektrischen Verbraucher (Vb-A.1 bis Vb-A.3, Vb-B.1 bis Vb-B.3, Vb-C.1 bis Vb-C.3, Vb-X.1 bis Vb-X.3) gekoppelt ist, bei einer Unterbrechung der elektrischen Verbindung zu der zugehörigen Eigenerzeugeranlage (E_{A}, E_{B}, E_{C}, E_{X}) mittels einer zur jeweils anderen Verbraucherschiene (S2) gehörigen Eigenerzeugeranlage (E_{A}, E_{B}, E_{C}, E_{X}) unterbrechungsfrei mit elektrischer Energie versorgt werden, wobei bei einem elektrischen Fehler in einem elektrischen Spulenzweig (SZ) einer Kurzschlussstrombegrenzungsspule (L2), über welche die Verbraucherschienen (S2) jeweils mit einer gemeinsamen elektrischen Ringverbindung (R) und elektrisch parallel zueinander verschaltet sind, mittels in einem zweiten Schutzbereich (SB2) angeordneter Leistungsschalter (Q6, Q7, Q8) der betroffene Spulenzweig (SZ) von der zugehörigen Verbraucherschiene (S2) und der Ringverbindung (R) entkoppelt wird und bei einem elektrischen Fehler in einem elektrisch parallel zu dem Spulenzweig (SZ) geschalteten Überbrückungszweig (UZ) der Überbrückungszweig (UZ) mittels eines in einem dritten Schutzbereich (SB3) angeordneten vierten Leistungsschalters (Q9), eines dritten Leistungsschalters (Q8) und eines zweiten Leistungsschalters (Q7) eines in der der zweiten Ringrichtung (+X) benachbart angeordneten Verbrauchernetzes (A, B, C, X) von der zugehörigen Verbraucherschiene (S2) und der Ringverbindung (R) entkoppelt wird, wobei bei Auftreten zumindest einer der elektrischen Fehler in Abhängigkeit von einer Höhe eines Fehlerstromes innerhalb der Ringverbindung (R) die Verbraucherschienen (S2) von dem Spulenzweig (SZ) und/oder Überbrückungszweig (UZ), in welchem bzw. welchen der elektrische Fehler vorliegt, mittels jeweils zwei in der Ringverbindung (R) angeordneter Schaltelemente (Q10) mit einer Schaltzeit von weniger als 10 ms ab einem vorgegebenen Spannungsfall (U%) der nach Anforderung der Last festgelegt wird, jedoch nicht höher als 30% an den Verbraucherschienen (S2) bzw. einem Summenfehlerstrom ab ca. 600% in der Ringverbindung (R), bezogen auf einen Nennstrom, elektrisch entkoppelt werden.

## Claims

1. Apparatus (1) for supplying power to electrical loads (Vb-A.1 to Vb-A.3, Vb-B.1 to Vb-B.3, Vb-C.1 to Vb-C.3, Vb-X.1 to Vb-X.3) without interruption, wherein at least two electrical autoproducer systems (E_{A}, E_{B}, E_{C}, E_{X}) which are independent of one another are connected electrically in parallel, wherein each autoproducer system (E_{A}, E_{B}, E_{C}, E_{X}) is coupled to at least one electrical load rail (S2), comprising at least one electrical load connection,
**characterized in that** at least two electrical protection regions (SB1 to SB3) for insulating electrical faults and a plurality of protection regions (SB_{A}, SB_{B}, SB_{C}, SB_{X}) with instantaneous tripping for electrically connecting load networks (A, B, C, X) in parallel, each comprising at least one load rail (S2), are provided in a common electrical ring connection (R), wherein the protection regions (SB_{A}, SB_{B}, SB_{C}, SB_{X}) with instantaneous tripping each include at least one load rail (S2) and an associated bridging path (UZ) for electrically coupling the load rail (S2) to the ring connection (R) and also include a coil path (SZ) for coupling a load rail (S2), which is adjacent in a second ring direction (+X), to the ring connection (R), and wherein in each case a first switching element (Q10) with a switching time of less than 10 ms for electrically decoupling the load rails (S2) from one another starting from a prespecified voltage drop (U%), which is defined in accordance with the load but is not greater than 30%, across the load rails (S2) or a sum fault current starting from approximately 600% in the ring connection (R), based on a rated current, is arranged in the ring connection (R) between each protection region (SB_{A}, SB_{B}, SB_{C}, SB_{X}) with instantaneous tripping and a protection region (SB_{A}, SB_{B}, SB_{C}, SB_{X}), which is adjacent in a first ring direction (-X), with instantaneous tripping and a protection region (SB_{A}, SB_{B}, SB_{C}, SB_{X}), which is adjacent in a second ring direction (+X), with instantaneous tripping.

2. Apparatus (1) according to Claim 1,
**characterized in that** the load networks (A, B, C, X) each comprise a bridging path (UZ) of a load rail (S2) and each at least partially comprise a coil path (SZ), which is connected electrically in parallel to said bridging path, of a load rail (S2) which is arranged adjacent in the second ring direction (+X), wherein in each case one load rail (S2) is connected to the ring connection (R) and electrically in parallel to at least one further load rail (S2) by means of a short circuit current limiting coil (L2) which is arranged in the coil path (S2).

3. Apparatus (1) according to Claim 2,
**characterized in that** a first circuit breaker (Q6) is arranged in the coil path (SZ) of the short circuit current limiting coil (L2) upstream of said coil and, downstream of the short circuit current limiting coil (L2), a coil connection node (SK) of the coil path (SZ) is electrically coupled to the ring connection (R) by way of a second circuit breaker (Q7) in the first ring direction (-X) and by way of a third circuit breaker (Q8) in the second direction (+X), wherein the bridging path (UZ) which is connected electrically in parallel to the respective short circuit current limiting coil (L2) is coupled to the load rail (S2) by way of a fourth circuit breaker (Q9) for bridging the respective short circuit current limiting coil (L2) and to the common electrical ring connection (R) by means of a bridging node (UK), wherein in each case one of the first switching elements (Q10) is arranged between the bridging node (UK) and the third circuit breaker (Q8).

4. Apparatus (1) according to one of the preceding claims,
**characterized in that** the protection regions (SB1 to SB3) comprise a first protection region (SB1) which comprises in each case one autoproducer system (E_{A}, E_{B}, E_{C}, E_{X}) and a second switching element (Q11) with a switching time of less than 10 ms for electrically decoupling the respective autoproducer system (E_{A}, E_{B}, E_{C}, E_{X}) from the associated load rails (S2).

5. Apparatus (1) according to Claim 3 or 4,
**characterized in that** the protection regions (SB1 to SB3) comprise a second protection region (SB2) which is in the form of a line differential protection region and which is formed between the first circuit breaker (Q6), the second circuit breaker (Q7) and the third circuit breaker (Q8), and **in that** the protection regions (SB1 to SB3) comprise a third protection region (SB3) which is in the form of a line differential protection region and which is formed between the fourth circuit breaker (Q9), the third circuit breaker (Q8) and the second circuit breaker (Q7) of a load network (A, B, C, X) which is arranged adjacent in the second ring direction (+X).

6. Apparatus (1) according to one of the preceding claims,
**characterized in that** the circuit breakers (Q6 to Q9) and second switching elements (Q11) which are present in the protection regions (SB1 to SB3) can be controlled independently of one another and independently of the first switching elements (Q10).

7. Apparatus (1) according to one of the preceding claims,
**characterized in that** the circuit breakers (Q6 to Q9) and switching elements (Q10, Q11) which are present in the protection regions (SB2, SB3) can be controlled as a function of a fault location and as a function of the severity of a fault.

8. Apparatus (1) according to one of the preceding claims,
**characterized in that** the parallel circuit of the load rails (S2) is formed in star in the ring connection (R).

9. Apparatus (1) according to one of the preceding claims,
**characterized in that** a redundant communication link (K) for information exchange is formed between the autoproducer systems (E_{A}, E_{B}, E_{C}, E_{X}), wherein, when communication is interrupted, a load rail (S2) which belongs to the respective autoproducer system (E_{A}, E_{B}, E_{C}, E_{X}) is isolated and operable in island mode.

10. Apparatus (1) according to one of the preceding claims,
**characterized in that** the autoproducer systems (E_{A}, E_{B}, E_{C}, E_{X}) are coupled to a common electrical power supply system (N).

11. Apparatus (1) according to Claim 10,
**characterized in that** the autoproducer systems (E_{A}, E_{B}, E_{C}, E_{X}) are arranged between the power supply system (N) and the respective load rail (S2) and are decoupled from the power supply system (N) by means of a first inductive impedance (L1.1) and a second inductive impedance (L1.2).

12. Method for operating the apparatus (1) according to one of the preceding claims,
**characterized in that** at least two load rails (S2) which are connected electrically in parallel and which are coupled to in each case one electrical autoproducer system (E_{A}, E_{B}, E_{C}, E_{X}, and wherein at least one of the load rails (S2) is coupled to at least one electrical load (Vb-A.1 to Vb-A.3, Vb-B.1 to Vb-B.3, Vb-C.1 to Vb-C.3, Vb-X.1 to Vb-X.3), are supplied with electrical energy without interruption when the electrical connection to the associated autoproducer system (E_{A}, E_{B}, E_{C}, E_{X}) is interrupted by means of an autoproducer system (E_{A}, E_{B}, E_{C}, E_{X}) which belongs to the respectively other load rail (S2), wherein, in the event of an electrical fault in an electrical coil path (SZ) of a short circuit current limiting coil (L2), by means of which the load rails (S2) are each connected to a common electrical ring connection (R) and to one another electrically in parallel, the coil path (SZ) in question is decoupled from the associated load rail (S2) and the ring connection (R) by means of circuit breakers (Q6, Q7, Q8) which are arranged in a second protection region (SB2), and, in the event of an electrical fault in a bridging path (UZ) which is connected electrically in parallel to the coil path (SZ), the bridging path (UZ) is decoupled from the associated load rail (S2) and the ring connection (R) by means of a fourth circuit breaker (Q9) which is arranged in a third protection region (SB3), a third circuit breaker (Q8) and a second circuit breaker (Q7) of a load network (A, B, C, X) which is arranged adjacent in the second ring direction (+X), wherein, when at least one of the electrical faults occurs, the load rails (S2) are electrically decoupled from the coil path (SZ) and/or bridging path (UZ) in which path or paths the electrical fault is present depending on a level of a fault current within the ring connection (R) by means of in each case two switching elements (Q10) which are arranged in the ring connection (R) and have a switching time of less than 10 ms starting from a prespecified voltage drop (U%), which is defined in accordance with the load but is not greater than 30%, across the load rails (S2) or a sum fault current starting from approximately 600% in the ring connection (R), based on a rated current.

## Revendications

1. Dispositif (1) d'alimentation ininterrompue en courant de charges électriques (Vb-A.1 à Vb-A.3, Vb-B.1 à Vb-B.3, Vb-C.1 à Vb-C.3, Vb-X.1 à Vb-X.3), dans lequel au moins deux générateurs autonomes (E_{A}, E_{B}, E_{C}, E_{X}) électriquement indépendants l'un de l'autre sont électriquement connectés en parallèle, dans lequel chaque générateur autonome (E_{A}, E_{B}, E_{C}, E_{X}) est couplé à au moins le rail de charge (S2), comprenant au moins une connexion de charge électrique,
**caractérisé en ce qu'**au moins deux zones de protection électrique (SB1 à SB3) destinées à isoler des défauts électriques et plusieurs zones de protection (SB_{A}, SB_{B}, SB_{C}, SB_{X}) à déclenchement instantané pour connecter électriquement en parallèle des réseaux de charge (A, B, C, X), comprenant respectivement au moins un rail de charge (S2), sont prévues dans une liaison annulaire électrique commune (R), dans lequel les zones de protection (SB_{A}, SB_{B}, SB_{C}, SB_{X}) à déclenchement instantané comprennent respectivement au moins un rail de charge (S2) et une branche de dérivation associée (UZ) pour coupler électriquement le rail de charge (S2) à la liaison annulaire (R) et une branche de bobine (SZ) pour coupler un rail de charge (S2) adjacent dans une deuxième direction annulaire (+X) à la liaison annulaire (R) et dans lequel un premier élément de commutation (Q10) ayant un temps de commutation inférieur à 10 ms pour découpler électriquement les rails de charge (S2) d'une chute de tension prédéterminée (U%) l'un par rapport à l'autre qui est fixée conformément à la demande de charge mais non supérieure à 30 % est disposé sur les rails de charge (S2), ou d'un courant d'erreur de somme d'environ 600 % dans la liaison annulaire (R) par rapport à un courant nominal dans la liaison annulaire (R) entre chaque zone de protection (SB_{A}, SB_{B}, SB_{C}, SB_{X}) à déclenchement instantané et une zone de protection (SB_{A}, SB_{B}, SB_{C}, SB_{X}) à déclenchement instantané adjacente dans une première direction annulaire (-X) et une zone de protection (SB_{A}, SB_{B}, SB_{C}, SB_{X}) à déclenchement instantané adjacente dans une seconde direction annulaire (+X).

2. Dispositif (1) selon la revendication 1,
**caractérisé en ce que** les réseaux de charges (A, B, C, X) comprennent respectivement une branche de dérivation (UZ) d'un rail de charge (S2) et respectivement au moins partiellement une branche de bobine (SZ) électriquement connectée à celle-ci en parallèle d'un rail de charge (S2) disposé de manière adjacente dans la seconde direction annulaire (+X), dans lequel un rail de charge (S2) respectif est connecté par l'intermédiaire d'une bobine de limitation de courant de court-circuit (L2) disposée dans la branche de bobine (SZ) à la liaison annulaire (R) et de manière électriquement parallèle à au moins un autre rail de charge (S2).

3. Dispositif (1) selon la revendication 2,
**caractérisé en ce que**, dans la branche de bobine (SZ) de la bobine de limitation de courant de court-circuit (L2), en amont de celle-ci, se trouve un premier commutateur de puissance (Q6) et en aval de la bobine de limitation de courant de court-circuit (L2), un noeud de connexion de bobine (SK) de la branche de bobine (SZ) est électriquement couplé à la liaison annulaire (R) dans la première direction annulaire (-X) par un deuxième commutateur de puissance (Q7) et, dans la deuxième direction annulaire (+X), par un troisième commutateur de puissance (Q8), dans lequel la branche de dérivation (UZ) connectée électriquement en parallèle à la bobine de limitation de courant de court-circuit respective (L2) est couplée par un quatrième commutateur de puissance (Q9) pour la dérivation de la bobine de limitation de courant de court-circuit respective (L2) du rail de charge (S2) et par l'intermédiaire d'un noeud de dérivation (UK) à la liaison annulaire électrique commune (R), dans lequel l'un des premiers éléments de commutation (Q10) est respectivement disposé entre le noeud de dérivation (UK) et le troisième commutateur de puissance (Q8).

4. Dispositif (1) selon l'une quelconque des revendications précédentes,
**caractérisé en ce que** les zones de protection (SB1 à SB3) comprennent une première zone de protection (SB1) qui comprend respectivement un générateur autonome (E_{A}, E_{B}, E_{C}, E_{X}) et un deuxième élément de commutation (Q11) ayant un temps de commutation inférieur à 10 ms pour découpler électriquement le générateur autonome respectif (E_{A}, E_{B}, E_{C}, E_{X}) des rails de charge associés (S2).

5. Dispositif (1) selon la revendication 3 ou la revendication 4,
**caractérisé en ce que** les zones de protection (SB1 à SB3) comprennent une deuxième zone de protection (SB2) réalisée sous la forme d'une zone de protection à conduction différentielle qui est réalisée entre le premier commutateur de puissance (Q6), le deuxième commutateur de puissance (Q7) et le troisième commutateur de puissance (Q8), et **en ce que** les zones de protection (SB1 à SB3) comprennent une troisième zone de protection (SB3) réalisée sous la forme d'une zone de protection à conduction différentielle qui est réalisée entre le quatrième commutateur de puissance (Q9), le troisième commutateur de puissance (Q8) et le deuxième commutateur de puissance (Q7) d'un réseau de charge (A, B, C, X) disposé de manière adjacente à la deuxième direction annulaire (+X).

6. Dispositif (1) selon l'une quelconque des revendications précédentes,
**caractérisé en ce que** les commutateurs de puissance (Q6 à Q9) et les deuxièmes éléments de commutation (Q11) présents dans les zones de protection (SB1 à SB3) peuvent être commandés indépendamment les uns des autres et indépendamment des premiers éléments de commutation (Q10).

7. Dispositif (1) selon l'une quelconque des revendications précédentes,
**caractérisé en ce que** les commutateurs de puissance (Q6 à Q9) et les éléments de commutation (Q10, Q11) présents dans les zones de protection (SB2, SB3) peuvent être commandés en fonction de l'emplacement d'un défaut et en fonction de l'intensité d'un défaut.

8. Dispositif (1) selon l'une quelconque des revendications précédentes,
**caractérisé en ce que** la connexion en parallèle des rails de charge (S2) est réalisée sous la forme d'une étoile dans la liaison annulaire (R).

9. Dispositif (1) selon l'une quelconque des revendications précédentes,
**caractérisé en ce qu'**une liaison de communication (K) redondante est réalisée à des fins d'échange d'informations entre les générateurs autonomes (E_{A}, E_{B}, E_{C}, E_{X}), dans lequel, lors d'une interruption de la communication, un rail de charge (S2) associé au générateur autonome respectif (E_{A}, E_{B}, E_{C}, E_{X}) est isolé et peut être mis en fonctionnement dans un mode de fonctionnement isolé.

10. Dispositif (1) selon l'une quelconque des revendications précédentes,
**caractérisé en ce que** les générateurs autonomes (E_{A}, E_{B}, E_{C}, E_{X}) sont couplés à un réseau d'alimentation électrique commun (N).

11. Dispositif (1) selon la revendication 10,
**caractérisé en ce que** les générateurs autonomes (E_{A}, E_{B}, E_{C}, E_{X}) sont disposés entre le réseau d'alimentation (N) et les rails de charge (S2) et sont découplés du réseau d'alimentation (N) au moyen d'une première impédance inductive (L1.1) et d'une deuxième impédance inductive (L1.2).

12. Procédé d'operation du dispositif (1) selon l'une quelconque des revendications précédentes,
**caractérisé en ce qu'**au moins deux rails de charge connectés électriquement en parallèle, qui sont respectivement couplés à un générateur électrique autonome (E_{A}, E_{B}, E_{C}, E_{X}) et dans lequel au moins l'un des rails de charge (S2) est couplé à au moins une charge électrique (Vb-A.1 à Vb-A.3, Vb-B.1 à Vb-B.3, Vb-C.1 à Vb-C.3, Vb-X.1 à Vb-X.3), lors d'une interruption de la liaison électrique avec le générateur autonome associé (E_{A}, E_{B}, E_{C}, E_{X}), sont alimentés en énergie électrique sans interruption au moyen d'un générateur autonome (E_{A}, E_{B}, E_{C}, E_{X}) respectivement associé à l'autre rail de charge (S2), dans lequel, lors d'un défaut électrique dans une branche de bobine électrique (SZ) d'une bobine de limitation de courant de court-circuit (L2), par l'intermédiaire de laquelle les rails de charge (S2) sont respectivement électriquement connectés les uns aux autres en parallèle par une liaison annulaire électrique commune (R), la dérivation de bobine concernée (SZ) est découplée du rail de charge (S2) associé et de la liaison annulaire (R) au moyen de commutateurs de puissance (Q6, Q7, Q8) disposés dans une deuxième zone de protection (SB2) et lors d'un défaut électrique dans une branche de dérivation (UZ) connectée électriquement en parallèle à la branche de bobine (SZ), la branche de dérivation (UZ) est découplée du rail de charge associé (S2) et de la liaison annulaire (R) au moyen d'un quatrième commutateur de puissance (Q9) disposé dans une troisième zone de protection (SB3), d'un troisième commutateur de puissance (Q8) et d'un deuxième commutateur de puissance (Q7) d'un réseau de charge (A, B, C, X) disposé de manière adjacente à la deuxième direction annulaire (+X), dans lequel, lors de la survenue d'au moins l'un des défauts électriques, les rails de charge (S2) sont électriquement découplés de la branche de bobine (SZ) et/ou de la branche de dérivation (UZ) dans laquelle ou lesquelles le défaut électrique est présent en fonction d'une intensité d'un courant de défaut dans la liaison annulaire (R) au moyen de deux éléments de commutation (Q10) respectivement disposés dans la liaison annulaire (R) ayant un temps de commutation inférieur à 10 ms à partir d'une chute de tension prédéterminée (U%) qui est fixée en fonction de la demande de charge mais non supérieure à 30 % sur les rails de charge (S2) ou d'un courant de défaut de somme d'environ 600 % dans la liaison annulaire (R), par rapport à un courant nominal.
